# EUROPÄISCHE PATENTSCHRIFT

(11) **EP 1 410 122 B1**
(45) Veröffentlichungstag und Bekanntmachung des Hinweises auf die Patenterteilung: **28.04.2010**
(21) Anmeldenummer: 02784841.5
(22) Anmeldetag: 05.07.2002
(51) Int. Cl.: G05B 19/418, G06F 17/30

(54) **VERFAHREN UND SYSTEM ZUR ELEKTRONISCHEN BEREITSTELLUNG VON DIENSTEN FÜR MASCHINEN ÜBER EINE DATENKOMMUNIKATIONSVERBINDUNG**
METHOD AND SYSTEM FOR THE ELECTRONIC PROVISION OF SERVICES FOR MACHINES BY MEANS OF A DATA COMMUNICATION LINK
PROCEDE ET SYSTEME DE FOURNITURE ELECTRONIQUE DE SERVICES POUR MACHINES PAR L'INTERMEDIAIRE D'UNE LIAISON DE COMMUNICATION DE DONNEES

(30) Priorität: 13.07.2001 US 305199 P; 13.07.2001 DE 10133406; 12.09.2001 US 950726; 29.10.2001 DE 10152765
(43) Veröffentlichungstag der Anmeldung: 21.04.2004
(73) Patentinhaber: SIEMENS AKTIENGESELLSCHAFT, 80333 München (DE)
(72) Erfinder: KREIDLER, Volker, 72379 Hechingen (DE); LAGIES, Knut, 70569 Stuttgart (DE); MUTSCHELLER, Wolfgang, 70178 Stuttgart (DE)
(86) Internationale Anmeldenummer: PCT/EP2002/007514
(87) Internationale Veröffentlichungsnummer: WO 2003/007097

(56) Entgegenhaltungen:
- EP-A- 0 051 861
- EP-A- 0 428 735
- EP-A- 0 822 473
- EP-A- 1 102 185

## Beschreibung

Die Erfindung betrifft ein System zur rechnergestützten Handhabung und Verwaltung einer numerisch gesteuerten industriellen Bearbeitungsmaschine sowie eine Vorrichtung und ein korrespondierendes Verfahren zur rechnergestützten Bereitstellung von maschinenbezogenen Daten und/oder Diensten.

Im Bereich der industriellen Automatisierungstechnik und insbesondere auf dem Gebiet numerisch gesteuerter Bearbeitungsmaschinen bieten Hersteller Service in Form von Steuerungstechnologie und entsprechenden Softwarekomponenten für andere Hersteller von Originalzubehör (sog. Original Equipment Manufacturer OEM) an, welche industrielle Bearbeitungsmaschinen herstellen und vermarkten.

Solche OEMs haben in der Regel gute Beziehungen mit ihren Endkunden, die oft selbst Hersteller von Zubehörs sind und die die von den OEMs erworbenen Maschinen und deren Zubehör betreiben und bedienen.

Solche OEMs entwickeln und vermarkten nicht nur Güter wie beispielsweise Werkzeugmaschinen, sondern bieten auch darüber hinausgehenden Service für die Produkte, die sie und andere an Endkunden verkaufen. Da die vertriebenen Produkte i. d. R. hochkomplex sind, bestehen hohe Anforderungen und Schwierigkeiten bei der Bereitstellung solcher Services, für die eine Vielzahl von Informationen mit Bezug auf die Bedienung ihrer Werkzeugmaschinen benötigt werden.

Die wesentlichen Schwierigkeiten dabei bestehen darin, Zugang zu für den Service benötigten Informationen der zu wartenden Maschinen zu erhalten. Dabei handelt es sich großteils auch um Informationen, die direkt aus dem Verarbeitungsprozess der Werkzeugmaschinen gewonnen werden müssen. Entsprechende Softwarekomponenten für solche Werkzeugmaschinen oder andere industrielle Bearbeitungsmaschinen sind in der Regel hochspezialisiert, was die Durchführung der eigentlichen Steuerungsaufgabe betrifft. Im Hinblick auf eine darüber hinausgehende Erfassung von Maschinendaten aus den oben genannten Gründen jenseits der unmittelbaren Steuerung der Maschine werden jedoch herkömmlich keine weiteren Maschineninformationen bereitgestellt.

Aus diesen und anderen Gründen waren Hersteller von numerischen Steuerungen und entsprechenden Softwarekomponenten für industrielle Bearbeitungsmaschinen nicht in der Lage, Leistungsverbesserungen an solchen Maschinen aufgrund von wissensbasierten Informationen direkt oder durch OEMs an ihre Endkunden zu liefern.

Aus diesem Grund besteht ein großes Bedürfnis auf der Grundlage solcher weiterführenden Maschinenzustandsdaten, vor allem für Wartung und Servicezwecke, den Endkunden möglichst schnell und an jedem Ort Dienstleistungen und Maschinen bezogenes Knowhow zur Verfügung zu stellen. Dadurch ließen sich die Verfügbarkeit solcher Maschinen, deren Lebensdauer und Produktivität entscheidend verbessern.

Bisher sind auch noch keine Verfahren oder Vorrichtungen bekannt geworden, auf deren Basis Dienste oder Softwarekomponenten entwickelt werden konnten, die auf gesammelten Maschinendaten basierend Dienstleistungen ermöglichen. Dadurch würden nämlich auch bisher nicht realisierbare automatisierte. Dienste möglich. Auch ist es bisher nicht möglich geworden, speziell auf die Bearbeitungsmaschine eines Endkunden zugeschnittene Dienste in einem vernünftigen Zeitrahmen jederzeit anbieten zu können, weil hierzu die Kapazitäten der Diensteanbieter i. d. R. nicht ausreichen.

Aus diesem Grund wird herkömmlich Servicepersonal mit entsprechendem Knowhow zum Endkunden entsandt, um dort physisch vor Ort manuell und damit in erster Linie auf spezielle Anforderungen der Endkunden die Maschine zu analysieren, vor Ort entsprechende Maschinendaten zu gewinnen und darauf aufbauend den entsprechenden Service bzw. Dienstleistungen zu bieten.

Die EP 0 822 473 A2 zeigt ein automatisiertes Instandhältungssystem mit einem ersten Computer, der im Fehlerfall Zustandsinformationen über den Betriebszustand eines angeschlossenen industriellen Geräts an einen entfernten Computer über das Internet sendet. Der entfernte Computer prüft, ob für diese Art von Fehlerfall Gegenmaßnahmen in einer Datenbank gespeichert sind und übermittelt ggf. eine Nachricht, Code, Programm oder Daten zur Beseitigung des Fehlers an den ersten Computer.

Auf diese Weise ist es jedoch nicht möglich, Echtzeit bezogene oder besonders rechenintensive Services wie z. B. Achsanalysen oder andere Optimierungen, Maschinenkalibrierungen, Software Services, Maschinendatenmanagement oder andere dynamische Eingriffe in die Maschine anzubieten.

Gerade dies wäre jedoch für Endkunden besonders wichtig, um deren Entwicklungszeiten zu verkürzen, deren Marktpräsenz zu steigern und eine maximale Verfügbarkeit der Maschinen zu gewährleisten.

Aufgabe der vorliegenden Erfindung ist es daher, ein Verfahren sowie eine korrespondierende Vorrichtung zu schaffen, welche ohne physische Präsenz vor Ort auch besonders rechenintensive Daten oder Services eines Herstellers oder Anbieters von Zubehör für die Maschine eines Endkunden verfügbar machen.

Gemäß der vorliegenden Erfindung wird diese Aufgabe durch ein System zur rechnergestützten Handhabung und Verwaltung einer numerisch gesteuerten industriellen Bearbeitungsmaschine mit den folgenden Merkmalen gelöst:
- einen Hauptrechner zur Erzeugung und Bereitstellung von maschinenbezogenen Daten und/oder Diensten und
- einen maschinenseitiger Arbeitsrechner (, welcher mit dem Hauptrechner über ein Internet oder Intranet verbunden ist und durch den den Arbeitsrechner in Echtzeit Maschinenzustandsdaten erfassbar sind, an den Hauptrechner übertragbar sind und vom Hauptrechner mittels einer Analyse- und Auswerteeinheit in Abhängigkeit solcher Maschinenzustandsdaten generierte maschinenbezogene Daten und/oder Dienste empfangbar sind,
dadurch gekennzeichnet, dass
- der Hauptrechner ausgebildet ist zur Erzeugung und Bereitstellung einer Mehrzahl verschiedener Arten von Daten und/oder Diensten
- die arbeitsrechnerseitige Ermittlung von Maschinenzustandsdaten durch über das Internet oder Intranet vom Hauptrechner erhaltene Instruktionen steuerbar ist, sodass die Maschinenzustandsdaten mit Bezug auf den jeweiligen dem Kunden bereitgestellten Dienst bestimmt werden.

Dabei hat es sich als günstig erwiesen, wenn der Hauptrechner eine Kommunikationsverbindung zu einem übergeordneten Rechnersystem eines Maschinenherstellers oder Herstellers von Maschinenkomponenten aufweist, über die durch den Hauptrechner dem übergeordneten Rechnersystem Zugriff auf Systemdaten des Hauptrechners gewährbar ist. Auf diese Weise können zum einen Serviceroutinen, insbesondere Softwarekomponenten, und zum anderen die Rechenkapazität eines solchen Rechners für die Analyse der gewonnenen Maschinendaten genutzt werden.

Wenn der maschinenseitige Arbeitsrechner (client) gegenüber dem Hauptrechner (host) über ein eindeutiges Identifizierungsmittel, insbesondere einen Identifizierungscode, verfügt, so kann der Hauptrechner (host) von diesem Arbeitsrechner empfangene Maschinenzustandsdaten diesem Arbeitsrechner zuordnen. Auf diese Weise lassen sich umfangreiche Archive mit maschinenbezogenen Daten verschiedener Endkunden und Maschinen erzeugen, die etwa zu statistischen Zwecken oder zum Aufbau einer Fehlerhistorie dienen können.

Dies gelingt besonders effektiv, wenn vom Hauptrechner (host) zum Arbeitsrechner (client) Internetseiten oder Intranetseiten zur benutzergestützten Auswahl von darin bereitgestellten Optionen übertragbar sind.

Ferner wird die Aufgabe der Erfindung auch durch ein Verfahren zur rechnergestützten Erzeugung und Bereitstellung von maschinenbezogenen Daten und/oder Diensten für eine numerisch gesteuerte industrielle Bearbeitungsmaschine gelöst, wobei ein Hauptrechner und ein maschinenseitiger Arbeitsrechner über eine Datenkommunikationsverbindung kommunizieren, mit den folgenden Verfahrensschritten:
- Erfassung von Maschinenzustandsdaten auf Seiten des Arbeitsrechners,
- Übertragung der erfassten Maschinenzustandsdaten über die Datenkommunikationsverbindung zum Hauptrechner,
- Erzeugung von maschinenbezogenen Daten und/oder Diensten auf Seiten des Hauptrechners in Abhängigkeit solcher Maschinenzustandsdaten und
- Bereitstellung dieser maschinenbezogenen Daten und/oder Dienste an den Arbeitsrechner bzw. dessen Benutzer,
dadurch gekennzeichnet, dass
das Verfahren ausgebildet ist zur Erzeugung und Bereitstellung einer Mehrzahl verschiedener Arten von Daten und/oder Diensten und ferner folgende Verfahrensschritte enthalten sind:
- Übertragung von Informationen zur Verfügbarkeit von maschinenbezogenen Daten und/oder Diensten vom Hauptrechner zum Arbeitsrechner,
- Empfang einer Anforderung nach maschinenbezogenen Daten und/oder einem Dienst vom Arbeitsrechner auf Seiten des Hauptrechners,
- Übertragung von Informationen mit Bezug zu vom Arbeitsrechner zu erfassenden benötigten Maschinenzustandsdaten vom Hauptrechner zum Arbeitsrechner,
wobei die Erfassung von Maschinenzustandsdaten auf Seiten des Arbeitsrechners erfolgt unter Bestimmung von Messdaten mit Bezug auf den dem Kunden bereitgestellten Dienst, wobei ferner die Übertragung der erfassten Maschinenzustandsdaten über die Datenkommunikationsverbindung zum-Hauptrechner erfolgt unter Empfang von Daten des Arbeitsrechners beinhaltend die benötigten Maschinenzustandsdaten auf Seiten des Hauptrechners, wobei ferner die Erzeugung von maschinenbezogenen Daten und/oder Diensten auf Seiten des Hauptrechners in Abhängigkeit solcher Maschinenzustandsdaten erfolgt unter Erzeugung der vom Arbeitsrechner angeforderten maschinenbezogenen Daten und/oder des angeforderten Dienstes durch den Hauptrechner, und wobei ferner die Bereitstellung dieser maschinenbezogenen Daten und/oder Dienste an den Arbeitsrechner bzw. dessen Benutzer erfolgt unter Übertragung der vom Arbeitsrechner angeforderten maschinenbezogenen Daten und/oder des angeforderten Dienstes vom Hauptrechner zum Arbeitsrechner.

Dabei hat es sich als besonders günstig erwiesen, wenn Maschinenzustandsdaten auf Seiten des Arbeitsrechners (client) in Echtzeit erfasst werden.

Auch dabei können die bereits angesprochenen Vorteile hinsichtlich einer Datenarchivierung erzielt werden, indem ein mit dem maschinenseitigen Arbeitsrechner (client) assoziiertes eindeutiges Identifizierungsmittel, insbesondere ein Identifizierungscode, zum Hauptrechner (host) übertragen wird. Dazu ordnet der Hauptrechner (host) von einem Arbeitsrechner empfangene Maschinenzustandsdaten diesem Arbeitsrechner anhand des Identifizierungsmittel zu.

Auf diese Weise wird die Erstellung einer Datenbank mit maschinenbezogenen Daten für eine Mehrzahl von industriellen Bearbeitungsmaschinen ermöglicht, wobei ein gemeinsamer Hauptrechner (host) für eine Mehrzahl von den industriellen Bearbeitungsmaschinen zugeordneten Arbeitsrechnern (clients) eine rechnergestützte Erzeugung und Bereitstellung von maschinenbezogenen Daten und/oder Diensten wie vorangehend be schrieben vornimmt und wobei in einem Speichermittel ein Datensatz mit den Maschinenzustandsdaten eines der Arbeitsrechner (clients) erzeugt wird und der diesem Arbeitsrechner zugeordnete eindeutige Identifizierungscode bestimmt und in den Datensatz eine dem Identifizierungscode entsprechende Information angefügt wird.

Vorzugsweise umfassen die Maschinenzustandsdaten Programmdaten oder Servodaten oder Motordaten oder Umrichterdaten oder Positionsdaten oder Sensordaten. Darüber hinaus sind aber je nach Anwendung auch weitere Maschinenzustandsdaten ermittelbar.

Nach einer weiteren vorteilhaften Ausgestaltung des Verfahrens der vorliegenden Erfindung speichert der Arbeitsrechner (client) die erfassten Maschinenzustandsdaten in einem Speichermittel zwischen, bevor diese an den Hauptrechner (host) übertragen werden.

Eine solche Übertragung von in dem Speichermittel abgelegten Maschinenzustandsdaten erfolgt vorzugsweise zeitgesteuert oder ereignisgesteuert über die Datenkommunikationsverbindung an den Hauptrechner (host). Es ist darüber hinaus von Vorteil, wenn auf Seiten des Hauptrechners (host) eine automatische Analyse bzw. Auswertung empfangener Maschinenzustandsdaten erfolgt.

Zur Erfassung der durch die bereitgestellten Dienstleistungen verursachten Kosten ist es weiter von Vorteil, wenn der Hauptrechner vom Arbeitsrechner Informationen bezüglich einer Bezahlung angeforderter maschinenbezogener Daten und/oder Dienste empfängt und speichert. Zur Erfassung von Preisinformationen zur Bezahlung haben sich außerdem die folgenden weiteren Verfahrensschritte als günstig erwiesen:
- Bestimmen einer ersten Preisinformation als Fixkosten eines vorgegebenen wiederkehrenden Zeitraums, insbesondere eines Monatszeitraums,
- Bestimmen einer zweiten Preisinformation als variable Kosten in Abhängigkeit eines bereitgestellten Dienstes.

Zur rechnergestützten Bereitstellung.von Service-Diensten zu Optimierungszwecken werden nach einer weiteren vorteilhaften Ausführung der Erfindung die folgenden weiteren Verfahrensschritte durchgeführt:
- Erzeugung einer Datenstruktur zur Aufnahme von Daten mit Bezug auf einen Service-Dienst,

Die Aufgabe der Erfindung wird ferner auch gelöst durch ein Verfahren zur rechnergestützten Bereitstellung von maschinenbezogenen Daten und/oder Diensten von einem Hauptrechner eines Dienste-Anbieters zu einem Arbeitsrechner einer Bearbeitungsmaschine eines Kunden über ein Netzwerk, wobei der Arbeitsrechner der Bearbeitungsmaschine des Kunden über ein System zur Steuerung und/oder Kontrolle der Bearbeitungsmaschine und einen geeigneten Sensor zur Erfassung von Maschinenzustandsdaten verfügt und mit dem Netzwerk verbunden ist, mit den folgenden Verfahrensschritten:
- Übertragung von Informationen zur Verfügbarkeit von maschinenbezogenen Daten und/oder Diensten vom Hauptrechner zum Arbeitsrechner,
- Empfang einer Anforderung nach maschinenbezogenen Daten und/oder einem Dienst vom Arbeitsrechner auf Seiten des Hauptrechners,
- Übertragung von Informationen mit Bezug zu vom Arbeitsrechner zu erfassenden benötigten Maschinenzustandsdaten vom Hauptrechner zum Arbeitsrechner,
- Empfang von Daten des Arbeitsrechners beinhaltend die benötigten Maschinenzustandsdaten auf Seiten des Hauptrechners,
- Erzeugung der vom Arbeitsrechner angeforderten maschinenbezogenen Daten und/oder des angeforderten Dienstes durch den Hauptrechner und
- Übertragung der vom Arbeitsrechner angeforderten maschinenbezogenen Daten und/oder des angeforderten Dienstes vom Hauptrechner zum Arbeitsrechner.

Zur Erfassung der durch die bereitgestellten Dienstleistungen verursachten Kosten ist es weiter von Vorteil, wenn der Hauptrechner vom Arbeitsrechner Informationen bezüglich einer Bezahlung angeforderter maschinenbezogener Daten und/oder Dienste empfängt und speichert. Zur Erfassung von Preisinformationen zur Bezahlung haben sich außerdem die folgenden weiteren Verfahrensschritte als günstig erwiesen:
- Bestimmen einer ersten Preisinformation als Fixkosten eines vorgegebenen wiederkehrenden Zeitraums, insbesondere eines Monatszeitraums,
- Bestimmen einer zweiten Preisinformation als variable Kosten in Abhängigkeit eines bereitgestellten Dienstes.

Zur rechnergestützten Bereitstellung von Service-Diensten zu Optimierungszwecken werden nach einer weiteren vorteilhaften Ausführung der Erfindung die folgenden weiteren Verfahrensschritte durchgeführt:
- Erzeugung einer Datenstruktur zur Aufnahme von Daten mit Bezug auf einen Service-Dienst,
- Speichern erster Daten in der Datenstruktur, welche die Identität eines Kunden repräsentieren, insbesondere des eindeutigen Identifizierungscodes und
- Speichern weiterer Daten in der Datenstruktur, welche die Identität des Service-Dienstes repräsentieren.

Dabei haben sich die folgenden weiteren Verfahrensschritte als vorteilhaft herausgestellt:
- Bestimmen von Messdaten mit Bezug auf den dem Kunden bereitgestellten Service-Dienst und
- Speichern weiterer Daten in der Datenstruktur, welche diese Messdaten repräsentieren.

Des weiteren wird die Aufgabe der Erfindung durch eine Vorrichtung zur rechnergestützten Bereitstellung von maschinenbezogenen Daten und/oder Diensten auf einem Hauptrechner eines Dienste-Anbieters für einen Arbeitsrechner.einer Bearbeitungsmaschine eines Kunden über ein Netzwerk gelöst, insbesondere mit einem System zur rechnergestützten Handhabung und Verwaltung einer numerisch gesteuerten industriellen Bearbeitungsmaschine wie voranstehend geschildert, wobei der Arbeitsrechner der Bearbeitungsmaschine des Kunden über ein System zur Steuerung und/oder Kontrolle der Bearbeitungsmaschine und einen geeigneten Sensor zur Erfassung von Maschinenzustandsdaten verfügt und mit dem Netzwerk verbunden ist, mit den folgenden weiteren Merkmalen auf Seiten des Hauptrechners:
- einem Mittel zur Übertragung
   - von Informationen zur Verfügbarkeit von maschinenbezogenen Daten und/oder Diensten vom Hauptrechner zum Arbeitsrechner und von
   - Informationen mit Bezug zu vom Arbeitsrechner zu erfassenden benötigten Maschinenzustandsdaten vom Hauptrechner zum Arbeitsrechner und
   - der vom Arbeitsrechner angeforderten maschinenbezogenen Daten und/oder des angeforderten Dienstes vom Hauptrechner zum Arbeitsrechner und
- einem Mittel zum Empfang
   - einer Anforderung nach maschinenbezogenen Daten und/oder einem Dienst vom Arbeitsrechner auf Seiten des Hauptrechners und
   - von Daten des Arbeitsrechners beinhaltend die benötigten Maschinenzustandsdaten auf Seiten des Hauptrechners und
- einem Mittel zur Erzeugung der vom Arbeitsrechner angeforderten maschinenbezogenen Daten und/oder des angeforderten Dienstes durch den Hauptrechner.

Dies lässt sich besonders effektiv realisieren, wenn das Mittel zur Erzeugung der vom Arbeitsrechner angeforderten maschinenbezogenen Daten und/oder des angeforderten Dienstes durch den Hauptrechner einen Internet-Web-Server umfasst und der Hauptrechner geeignet programmiert ist, um damit Internet-Web-Seiten zu erzeugen.

Auch hier ist es von Vorteil, wenn der Arbeitsrechner des Kunden ein eindeutiges Identifizierungsmittel, insbesondere einen Identifizierungscode, für die Bearbeitungsmaschine aufweist und wenn der Hauptrechner über ein Speichermittel, insbesondere eine Datenbank, zur Aufnahme von Informationen des Arbeitsrechners in Verbindung mit dem Identifizierungscode verfügt.

Schließlich wird die Aufgabe der Erfindung auch durch eine Vorrichtung zur rechnergestützten Bereitstellung von Service-Diensten für ein Automatisierungssystem über ein Netzwerk gelöst, insbesondere mit einem vorstehend beschriebenen System zur rechnergestützten Handhabung und Verwaltung einer numerisch gesteuerten industriellen Bearbeitungsmaschine, und zwar mit den folgenden Merkmalen:
- einem Mittel zum Laden von Instruktionen auf das Automatisierungssystem, wobei die Instruktionen mindestens eine Funktion oder einen anderen Aspekt des Automatisierungssystems steuern,
- einem Mittel zum Empfang von kundenbezogenen Systemdaten vom Automatisierungssystem über das Netzwerk, wobei solche Systemdaten in Abhängigkeit von den geladenen Instruktionen gesammelt werden,
- einem Mittel zur Generierung von geeigneten Service-Diensten für das Automatisierungssystem in Abhängigkeit der gesammelten kundenbezogenen Systemdaten und
- einem Mittel zur Übertragung solcher Service-Dienste zum Automatisierungssystem des Kunden über das Netzwerk.

Dabei hat es sich als günstig erwiesen, wenn ein Mittel zur Bereitstellung einer Auswahl von Optionen des Service-Dienstes an das Automatisierungssystem des Kunden über das Netzwerk vorgesehen ist. Dies gilt ebenfalls für ein Mittel zur Auswahl einer der Optionen des Service-Dienstes auf Seiten des Automatisierungssystems des Kunden.

Weitere Vorteile erhält man, wenn das Automatisierungssystem über ein Netzwerk-Interface zur Kommunikation über das Netzwerk und zum Empfang der Dienst-Informationen verfügt und ein Mittel (machine agent) zur Erzeugung von maschinenausführbaren Programmabläufen auf Basis der empfangenen Dienste vorgesehen ist, wobei das Netzwerk-Interface und das Mittel zur Erzeugung von maschinenausführbaren Programmabläufen über ein vorgegebenes Datenformat Daten austauschen. Dies gelingt besonders effektiv, wenn das Netzwerk-Interface einen Internet-Browser umfasst.

Das vorangehend beschriebene Verfahren gemäß der Erfindung lässt sich besonders gut zur Ferninbetriebnahme oder Fernwartung einer industriellen Arbeitsmaschine einsetzen.

Daneben empfiehlt sich auch eine Verwendung zur Durchführung einer Untermenge der folgenden Maßnahmen:
- Elektronisches Vermessen von Werkstücken, Werkzeugen und Aufspannungen zur Diagnose von Problemen bei mangelnder Werkstückqualität oder zur dialoggeführten Korrektur der Verhältnisse,
- Aufzeigen der Zusammenhänge von Prozessvariablen wie Laserleistung, Vorschubgeschwindigkeit oder Werkzeugdrehzahl und Vorschubgeschwindigkeit,
- Analyse der Werkzeugbahnen im kartesischen Koordinatensysterm mit Korrektur oder Aussage zu Gutteil/Schlechtteil,
- Monitoring von Prozessvariablen mit Grenzwertüberwachung und/oder Korrelationsüberwachung,
- Programmanalyse durch Abarbeiten eines Programms in einer virtuellen Nachbildung der Bearbeitungsmaschine,
- Automatisches Erstellen von Inbetriebnahmeprotokollen zur lückenlosen Dokumentation des Inbetriebnahmezustandes,
- Automatisches Erstellen von Service und Wartungsprotokollen zur lückenlosen Dokumentation der Maschinenhistorie,
- Auswertung zur Diagnose von Ausnahme- und Fehlersituationen,
- Sicherung und Archivierung von Konfigurationsdaten, Anwenderdaten und Programmen zur Rekonstruktion von Zuständen oder zur Erkennung problembehafteter Änderungen.

Ein solcher erfindungsgemäßer online Dienst, im Folgenden auch als ePS-Network (Electronic Production Services) bezeichnet, verbessert die Maschinenverfügbarkeit für die Hersteller und erhöhen die Verfügbarkeit der Maschinen für die Anwender.

Die erfindungsgemäße E-Business-Infrastruktur ermöglicht den Maschinenherstellern die Maschinen ihrer Kunden wesentlich einfacher und effizienter zu warten. Alle ePS-Dienste erfolgen mit einer hohen Online-Sicherheit.

ePS-Dienstleistungen, die den Maschinennutzern angeboten werden, sind darauf ausgerichtet, die Betriebskosten zu minimieren, die Lebensdauer der Maschine zu erhöhen, die Produktqualität zu verbessern, die Produktivität zu steigern und eine maximale Verfügbarkeit der Produktionsmittel zu gewährleisten.

Weitere Vorteile und Details der vorliegenden Erfindung ergeben sich anhand der im Folgenden dargestellten Ausführungsbeispiele und in Verbindung mit den Figuren. Es zeigen jeweils in Prinzipdarstellung:
- FIG 1: ein Blockschaltbild eines erfindungsgemäßen Systems zur Bereitstellung automatisierter Dienste über ein Netzwerk sowie alternativer oder ergänzender manueller Dienste,
- FIG 2: ein Blockschaltbild eines Systems gemäß der vorliegenden Erfindung zur Bereitstellung automatisierter Dienste und/oder Daten an einen Endkunden über ein Netzwerk,
- FIG 3: ein Blockschaltbild einer vorteilhaften erfindungsgemäßen Ausführungsform,
- FIG 4: ein weiteres Blockschaltbild einer Client-Server-Architektur auf Grundlage der vorliegenden Erfindung mit Schwerpunkt auf Seite des Clients/Arbeitsrechners,
- FIG 5 bis FIG 7: verschiedene Phasen und Parameter zur Durchführung eines Kreisformtests mit einem erfindungsgemäßen System.

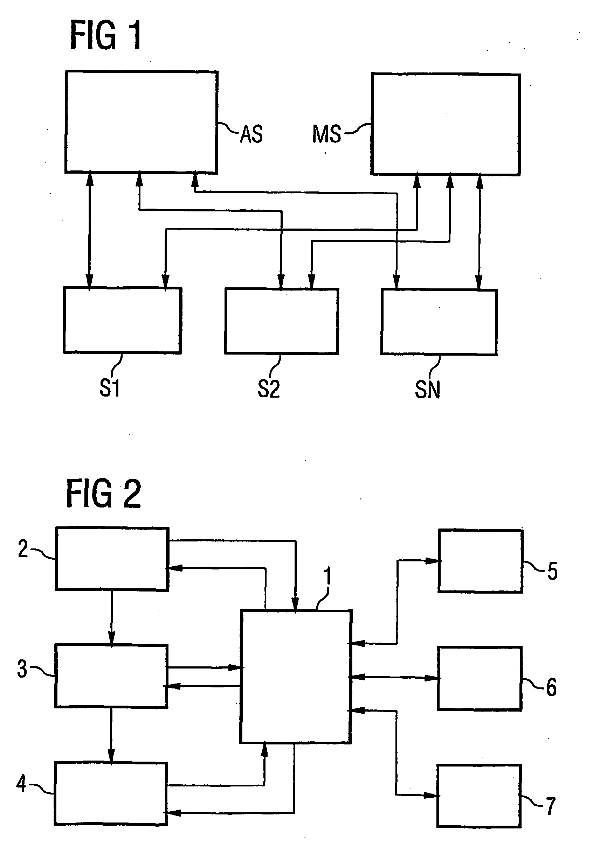

Die Darstellung gemäß FIG 1 zeigt auf einem hohen Abstraktionsgrad, wie auf Basis einer Internet Verbindung automatische Dienstleistungen AS oder dafür erforderliche Dateninhalte bzw. Softwarekomponenten zu einer Mehrzahl von Endkunden mit Maschinen S1...SN verfügbar gemacht werden, mit denen Informationen bidirektional ausgetauscht werden. Zusätzlich ist ein herkömmlicher Anbieter MS manueller Dienste bzw. Ingenieurleistungen (z.B. OEM) gezeigt, welcher ebenfalls mit den Endkunden und deren Maschinen S1...SN kommuniziert, jedoch auf herkömmliche Weise. Nachteilig an einer solchen Anordnung bzw. einem solchen System ist die Tatsache, dass keine Kommunikation zwischen dem Anbieter der Internet-basierten automatischen Dienste und dem Anbieter herkömmlicher manueller Dienstleistungen stattfindet. Dadurch kann nicht die auf beiden Seiten vorhandene technische Expertise genutzt werden.

Die Darstellung nach FIG 2 zeigt im linken Bildbereich die übliche Produktionskette bzw. Lieferantenkette von Werkzeugmaschinen. Ein Lieferant 2 eines Automatisierungsproduktes, der für die Steuerungs-Hardware und -Software verantwortlich zeichnet, vertreibt seine Produkte und Dienstleistungen an einen Kunden, i. d. R. einen Werkzeugmaschinen-OEM 3. Der OEM seinerseits konstruiert auf Grundlage der erworbenen Steuerungssysteme mit zusätzlichen, selbst hergestellten oder zugekauften Komponenten die eigentliche Werkzeugmaschine. Diese Werkzeugmaschine wird üblicherweise an sogenannte Endkunden 4 vertrieben, bei es denen sich i. d. R. um Fertigungsbetriebe handelt.

Ein Anbieter 1 der erfindungsgemäßen automatisierten Dienste auf Grundlage eines Netzwerkes, insbesondere einer Internet-Verbindung, steht i. d. R. in wechselseitiger Kommunikation mit allen drei genannten Parteien. Vorzugsweise steht ein Anbieter 1 von erfindungsgemäßen automatisierten Diensten noch mit weiteren Anbietern von Software Tools 5 oder speziellen Dienstleistungen 6 sowie mit weiteren Internet-Partnern 7 in Kontakt (vgl. rechter Bildbereich).

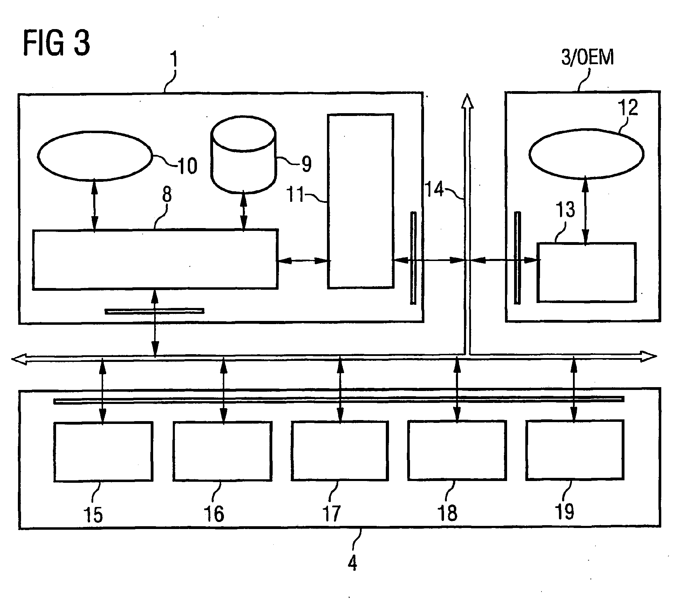

In der FIG 3 ist nun eine detailliertere Darstellung der Hauptakteure 1, 3 und 4 aus FIG 2 gezeigt. Der Diensteanbieter 1 weist einen e-Business-Hauptrechner bzw. -host 8 auf, der mit einer System- bzw. Kundendatenbank 9 kommuniziert und von einem interaktiven Benutzer 10 bedient wird. Über eine sogenannte offene Anwendungsprogrammier-Schnittstelle 11 (Application Programming Interface API) wird einem OEM-Partner 3 der Zugriff auf die vom Hauptrechner 8 bereitgestellten Dateninhalte ermöglicht.

Ein weiterer interaktiver Benutzer 12 auf Seiten des OEM-Partners 3 kann auf diese Weise, wie im Folgenden noch näher ausgeführt wird, vom Zugriff auf die genannten Kundendaten bzw. die Kundendatenbank 9 profitieren. Dies geschieht vorzugsweise durch Kommunikation mittels eines Hauptrechners bzw. hosts 13 auf Seiten des OEM-Partners 3 über eine Netzwerkverbindung, z. B. eine Internet-Verbindung 14. Zu diesem Zweck werden vorzugsweise Maßnahmen zur sicheren Kommunikation, z. B. Verschlüsselungsverfahren (Kanalverschlüsselung oder asymmetrische Dokumentenverschlüsselung) sowie Verfahren zur Sicherung der Datenintegrität (z.B. Erzeugung von Hash-Werten), eingesetzt.

Auf Seiten des Endkunden 4 sind über entsprechende Schnittstellen Komponenten 15 bis 19 mit dem Netzwerk, z. B. der Internet-Verbindung 14, und damit mit den Systemen des Diensteanbieters 1 und des OEM-Partners 3 verbunden. Diese Komponenten auf Seiten des Endkunden 4 können sowohl zu wartende Komponenten, als auch Daten liefernde Komponenten sein (z. B. CNC/PLC-Systeme 15, Peripheriegeräte oder Sensoren 16, Steuerungen 17, Arbeitsplatzrechner bzw. PCs 18 oder Hauptrechner/hosts 19).

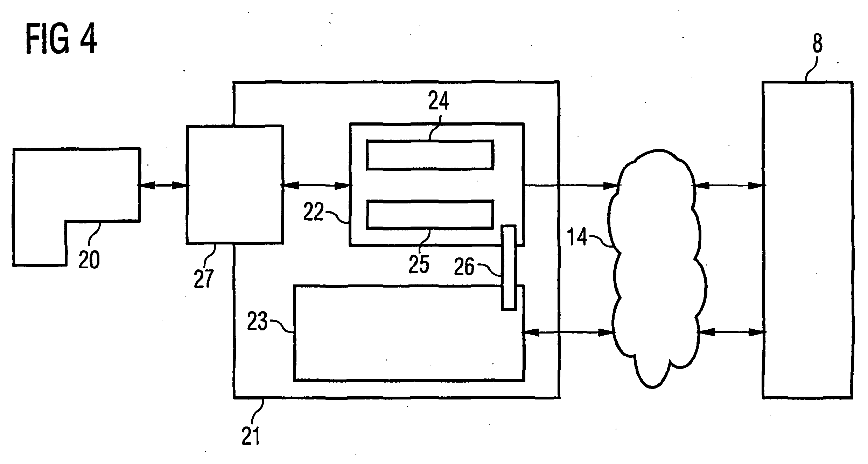

Die Darstellung gemäß der FIG 4 zeigt nun die strukturelle und funktionale Beziehung gemäß der vorliegenden Erfindung zwischen einem Client-System bzw. Arbeitsrechner 21 eines Endkunden und einem Hauptrechner 8 eines Diensteanbieters sowie eine beispielhafte Werkzeugmaschine 20. Dabei ist besonderes Gewicht auf die technische Realisierung auf Seite des clients/Arbeitsrechners eines Endkunden gelegt. Das Client-System bzw. der Arbeitsrechner 21 des Endkunden umfasst u. a. eine Steuerung mit einer Mensch-Maschine-Schnittstelle (Human Machine Interface HMI), also den Bereich der Steuerung, mit dem ein Maschinenbediener interagiert. Über diese Schnittstelle wird Zugriff auf verschiedene Applikationen gewährt. Daneben ist eine numerische Steuerung NC vorgesehen, die eine Steuerungseinheit NCU sowie eine Steuerungskern NCK umfasst.

Die Steuerung der Mensch-Maschine-Schnittstelle 21 des Arbeitsrechners weist eine bidirektionale Kommunikationsverbindung zum Hauptrechner 8 des Anbieters automatisierter Dienste über ein Netzwerk auf, vorzugsweise über eine Internet-Verbindung 14. Dies erfolgt vorzugsweise über einen Internet Browser 23, der auf der Softwareschicht des Betriebssystems des Arbeitsrechners läuft und über den Internetseiten, sog. Web-pages, vom Hauptrechner 8 geladen werden können.

Ein Maschinenbediener kann auf konventionelle Weise auf eine Internet-Seite des Hauptrechners zugreifen, um bestimmte Dateninhalte des Hauptrechners anzufordern. Der Hauptdatentransfer erfolgt vom Hauptrechner 8 zum Internetbrowser 23. Angestoßen durch Reaktionen eines Maschinenbedieners, zum Beispiel die Auswahl spezieller Optionen oder Parameter, bewirken dann einen Transport von damit verbundenen Informationen über die Internet-Verbindung 14 (z. B. das world-wide-web WWW) zurück zum Hauptrechner 8. In dieser Phase der Kommunikation zwischen Arbeitsrechner 21 und Hauptrechner 8 werden jedoch noch keine Steuerungs-bezogenen Daten zum Hauptrechner 8 übertragen.

Der Arbeitsrechner/client 21 weist darüber hinaus auch ein Maschinendienstprogramm bzw. machine agent 22 auf, das ebenfalls im Kontext der Mensch-Maschine-Schnittstelle und der numerischen Steuerung abläuft und in der Lage ist, Befehlsanweisungen von Seiten des Hauptrechners 8 entgegenzunehmen und sogenannte maschinenausführbare jobs 24, 25 zu generieren, welche direkt von der numerischen Steuerung ausführbar sind. Dazu ist der machine agent 22 über eine Steuerungsschnittstelle 27 (NC-Interface) mit der eigentlichen Werkzeugmaschine 20, einem Roboter oder dergleichen verbunden.

Der machine agent 22 und der Browser 23 kommunizieren über ein machine agent interface 26, welches vom Hauptrechner 8 geladene Dienste oder Daten über den Browser 23 in ein maschinenausführbares Format konvertiert. Unter den auf diese Weise generierten maschinenausführbaren jobs 24, 25 können sich sowohl Anweisungen zur Ausführung eines oder mehrerer Werkzeugmaschinen-Befehle zur Durchführung durch die numerische Steuerung befinden, als auch Anweisungen zur Erfassung von verfügbaren Maschinenzustandsdaten oder anderen Steuerungs-bezogenen Daten. Eine Datenerfassung kann auf der Grundlage einer bereits bestehenden sog. Ablaufverfolgung bzw. Trace-Funktionalität bekannter Werkzeugmaschinensysteme erfolgen. Im Rahmen der vorliegenden Erfindung sind jedoch auch verbesserte Trace-Funktionalitäten zur Erfassung von Maschinenzustandsdaten vorstellbar, die an späterer Stelle vorgestellt werden.

Aus Sicherheitsgründen ist es auch vorstellbar, dass ein Anstoß von Werkzeugmaschinenbefehlen eine manuelle Freischaltung durch einen Maschinenbediener voraussetzt. Erfasste Maschinenzustandsdaten können dann in Verbindung mit einem job und der abzuarbeitenden Reihenfolge solcher jobs vom machine agent 22 zum Hauptrechner 8 übertragen werden. Ein solcher Datentransfer ist im Rahmen der FIG 4 durch die oberen Pfeile, welche nur von links nach rechts verlaufen, angedeutet. Ein solcher Transfer ist also vorzugsweise unidirektional und muss nicht notwendigerweise eine Kommunikationsverbindung über das Internet umfassen, sondern es ist auch eine beliebige andere Netzwerkverbindung vorstellbar, z. B. durch einen so genannten remote access auf ein lokales Netzwerk LAN des Diensteanbieters 1.

Es ist in diesem Zusammenhang vor allem geraten, eine sichere und vor allem auch schnelle Kommunikationsverbindung zu wählen. Denn es kann nicht immer gewährleistet werden, dass vor allem in Echtzeit erfasste Maschinenzustandsdaten, die erst mit erheblicher Verspätung auf Seiten des Hauptrechners 8 beim Diensteanbieter eintreffen, noch ausreichend schnell verarbeitet werden können, um die angeforderten Daten beziehungsweise Dienste rechtzeitig zu generieren und zum Arbeitsrechner 21 zurückzuübertragen.

Auf Seiten des Hauptrechners 8 des Diensteanbieters 1 können in Abhängigkeit der empfangenen Maschinenzustandsdaten eine Vielzahl von verschiedenen Arten von zugeordneten Daten oder Diensten für den Eigentümer oder Bediener des Arbeitsrechners 21 erzeugt werden. Mögliche Beispiele sind im Folgenden angeführt.

Dazu wird eine konkrete Realisierung eines eingangs erwähnten ePS-Service auf Grundlage der vorliegenden Erfindung beschrieben.

Die CNC/SPS- Maschinenausrüstung (SPS steht für speicherprogrammierbare Steuerung) wird über das Internet mit dem ePS-Server verbunden. Maschinendaten aus dem Produktionsprozess werden in Echtzeit über den ePS-Server abgebildet und dort verdichtet, analysiert und bewertet. Die aus diesen Daten gewonnene Ergebnisse bezüglich Maschinenzustand, Maschinenauslastung, Prozessstabilität, Werkstückqualität, und der langfristig abzuleitenden Zustandsveränderungen der Maschine, werden an den Kunden via Internet übermittelt.

Das ePS-System bietet eine offene Programmier-Schnittstelle (API) für Anwender und Hersteller. Dadurch können ePS-Kunden auch ihr eigenes Anwendungs-/Maschinen-Know-How in Form eines e-Dienstes integrieren. ePS-Kunden können über die Maschinensteuerung oder via PC aus dem ePS-Dienstleistungsangebot ihre gewünschten e-Dienste online aktivieren.

Das ePS-Dienstleistungsangebot umfasst z.B. folgende e-Dienste:
- Maschinen Services
- Maschinen Performance
- Werkstück Services
- Daten Management
- e-sales

Der ePS-Dienst "Maschinen Services" unterstützt die Inbetriebnahme (CAR, computer aided runoff) und die Störungsanalyse im Servicefall.

Über den Service "Maschinen Performance" kann die Ergebnisvarianz aus den zyklisch wiederholten CAR-Messungen gezeigt werden. Der e-Dienst "Werkstück Services" sichert über die Echtzeiterfassung der Maschinendaten die Prozessstabilität und die Werkstückqualität. Des weiteren wird mit diesem Service über eine Visualisierung von NC-Programmen und deren Verarbeitung in der Steuerung, eine Früherkennung von Schwachstellen ermöglicht. Die somit bereits vor dem Bearbeitungsprozess erkannten Schwachstellen können beseitigt werden.

Daten Management ist ein Web-basierter Archivierungs- und Verwaltungsdienst von Steuerungsdaten, wie NC-Programme, Maschinendaten und Parameter. Diese Daten sind insbesondere für Kunden, die über keine eigene EDV-Infrastruktur verfügen, von Nutzen. Dieser Service ermöglicht dem Kunden mit einer hohen Datensicherheit eine schnelle Wiederaufnahme der Produktion bei eigenen Datenverlusten.

Maschinenanwender (Endkunden) und auch Maschinenhersteller stoßen bei der zunehmenden Komplexität von Maschinen und hoher Abhängigkeit zwischen Maschinenkomponenten und elektrischen Ausrüstungskomponenten schnell an ihre Grenzen, wenn es darum geht, die Produktivität, die Genauigkeit, die Qualität oder die Prozessstabilität der Maschine/Anlage zu erhöhen.

Zur Steigerung der Produktivität, der Genauigkeit, der Qualität oder der Prozessstabilität einer Maschine/Anlage wird meistens eine Person mit Expertenwissen (auf einem Spezialgebiet) vor Ort an die Maschine geschickt. In seltenen Fällen wird über ein Modem eine Punkt-zu-Punkt-Verbindung von der Automatisierungskomponente (z. B. einer Steuerung) zu einem Rechner beim Maschinenhersteller aufgenommen und der Experte beim Maschinenhersteller versucht über ein "Remote Human Machine Interface die Optimierungen oder Beseitigung von Fehlern vorzunehmen.

Folgende Geschäftsmodelle lösen dieses beschriebene Problem nun auf Grundlage der vorliegenden Erfindung mit dem vorangehend beschriebenen System. Dabei kann zwischen dem Geschäftsmodell (A) und dem Anbieten von Dienstleistungen (B) über ein Geschäftsmodell, z.B. Geschäftsmodell (A) unterschieden werden.

Das Geschäftsmodell-A umfasst z.B. die folgenden Maßnahmen:
- Aufnahme von (Echtzeit-) Daten (z. B. Programmdaten, Servodaten, Motordaten, Umrichterdaten, Positionen, Sensordaten) durch eine Automatisierungskomponente; anschließend Abspeichern dieser Daten in einem Speicher;
- anschließend Übertragen der Daten aus dem Speicher (z. B. zeitgesteuert oder ereignisgesteuert) via Internet in einen Rechner (Auswerte- und Analyseeinheit); anschließend Auswertung/Analyse/Vermessung dieser Daten in einem Rechner (in der Regel automatisiert und nicht durch Personen ausgeführt);
- anschließend eine Reaktion/Antwort über unterschiedliche Übertragungswege (z. B. via Internet, via e-Mail, via Mobile Phone, via Piepser, via Funk, via Telephon, etc..); anschließend gegebenenfalls Schließen des" Regelkreises" durch Aufnahme von (Echtzeit-) Daten (z. B. Programmdaten, Servodaten, Motordaten, Umrichterdaten, Positionen, Sensordaten.

Über ein solches oder ein ähnliches Geschäftsmodell, z.B. Geschäftsmodell (A), lassen sich nun die folgenden Dienstleistungen (B) bereitstellen. Unter Auswertung/Analyse/Vermessung dieser Daten in einem Rechner ist z.B. folgendes gemeint:
- Elektronisches Vermessen von Werkstücken, Werkzeugen und Aufspannungen (aus den aufgenommenen (Echtzeit-) Daten und nicht durch Vermessung des physikalisch vorhandenen Werkstücks) zum einen zur Diagnose von Problemen bei mangelnder Werkstückqualität (durch zu große Nachläufe, instabile Reglerverhältnisse, fehlerhafte Korrekturen etc..), zum anderen zur dialoggeführten Korrektur der Verhältnisse.
- Aufzeigen der Zusammenhänge von Prozessvariablen z. B. Laserleistung und Vorschubgeschwindigkeit, oder Werkzeugdrehzahl und Vorschubgeschwindigkeit. Aus diesen Auswertungen lassen sich Rückschlüsse über Prozessgüte, Fertigungstoleranzen, etc., gewinnen und gegebenenfalls korrigieren. Bei einwandfreiem Zustand des Werkzeuges (gut fokussierter Laser, einwandfreier Fräserzustand und -Geometrie) kann ein stabiler Prozess dokumentiert werden. Ein stabiler Prozess bedeutet gleichzeitig ein stabiles Ergebnis. Dadurch lassen sich in vielen Fällen nachträgliche Vermessungen verhindern, bzw. Probleme erkennen ohne auf Messergebnisse warten zu müssen.
- Analyse der Werkzeugbahnen (besonders an nicht kartesischen Werkzeugmaschinen) im kartesischen Koordinatensystem mit möglicher Korrektur oder Aussage zu Gutteil/ Schlechtteil. Zum Beispiel sind in vielen Parallelkinematikmaschinen geometrische Fehlerquellen in den Gelenken messtechnisch nicht zugänglich. Solche Fehler führen dazu, dass die Werkzeugspitze geometrisch unkorrekt bewegt wird. Solche Probleme können über redundante Messsysteme erkannt und korrigiert werden.
- Monitoring von Prozessvariablen mit Grenzwertüberwachung und/oder Korrelationsüberwachung. Bewertung der Grenzwerte/Korrelationen mit Expertensystemen und Korrektur bzw. Prozessabbruch.
- Programmanalyse durch Abarbeiten eines Programms in einer virtuellen CNC (inkl. Interpolationsdaten, Lagereglerdaten, Antriebssimulation und Mechanikmodell) und Visualisierung mit folgenden Zielen: Optimierung der Laufzeit, Optimierung der Werkstückqualität, Optimierung der Werkzeugwechsel, Kollisionsüberwachung, Geometriedatenüberwachung, etc..
- Automatisches Erstellen von Inbetriebnahmeprotokollen zur lückenlosen Dokumentation des Inbetriebnahmezustandes. Dabei wird eine Serie von Messungen wie zum Beispiel Kreisformtests, Positioniermessungen, Vermessung von Geschwindigkeitsprofilen, Antriebsströmen -und Momenten durchgeführt. Diese zeigen zum einen den einwandfreien Zustand der Maschine bei der Inbetriebnahme. Zum anderen dienen sie als "elektronischer Fingerabdruck" der Maschine, der dazu geeignet ist, verschleißbedingte Veränderungen der Maschine während des Betriebes frühzeitig zu erkennen. Die Messungen, die den elektronischen Fingerabdruck bilden, lassen sich zu einem Makro zusammenfassen und sind dann auf identische Weise in Form von sog. Batchjobs periodisch wiederholbar (Diagnosebatch).
- Zum Beispiel kann ein periodisch wiederholter Kreisformtest dazu dienen, lose oder zyklische Störungen als Folge von Verschleiß der Kugelrollspindel oder von Getrieben oder anderen Kraftübertragungsmechanismen, wie Zahnriemen etc.. zu erkennen.

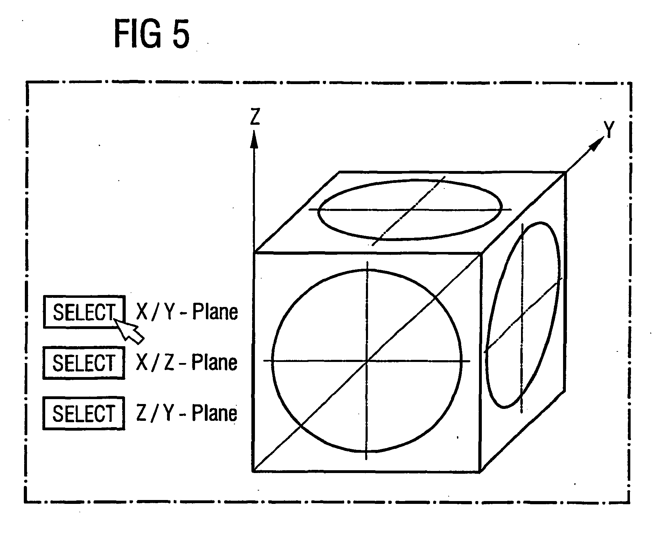

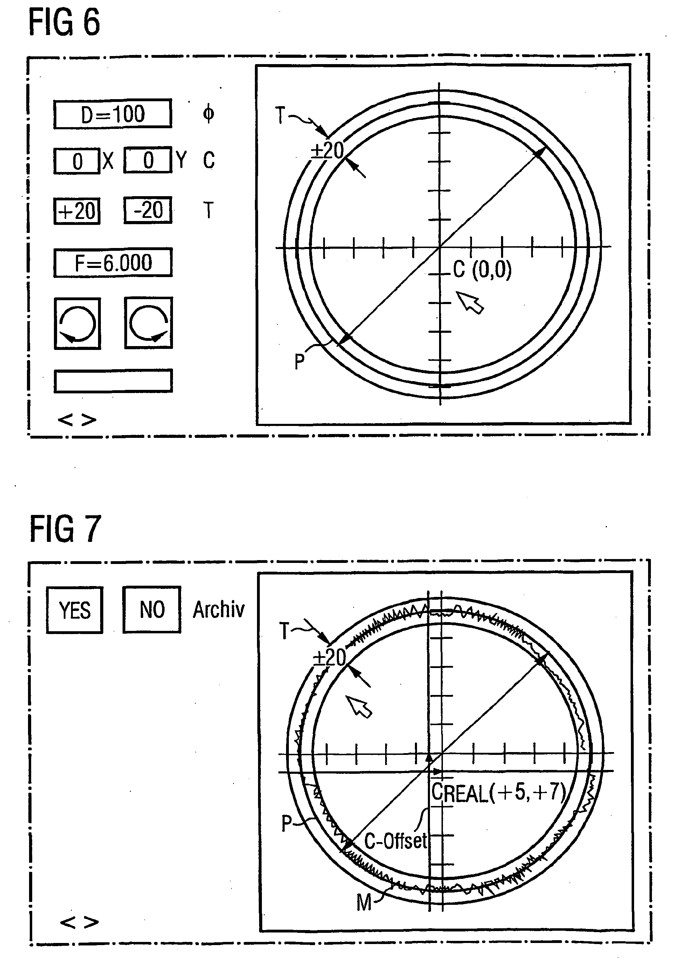

Ein Beispiel eines solchen Kreisformtests, der über das beschriebene erfindungsgemäße e-PS-System durchgeführt wird, ist in FIG 5 bis FIG 7 dargestellt, wobei jeweils die für den Anbieter der automatischen Dienstleistung "Kreisformtest" über das Internet kommunizierten, auf Seiten des Hauptrechners vorliegenden erfassten Maschinenzustandsdaten graphisch aufbereitet sind. Auf diese Wiese kann entweder ein Spezialist beim Hersteller manuell die erforderlichen Eingriffe an der Maschine vornehmen oder dies kann bevorzugt ebenfalls automatisch über eine elektronische Dienstleistung über die Internetverbindung erfolgen, indem erforderlichenfalls entsprechende Korrekturparameter an den Arbeitsrechner übertragen werden.
Dazu wird zunächst das Messverfahren und anschließend die zu testende Ebene x-y, x-z oder z-y ausgewählt (vgl. FIG 5 mit Auswahl der x-y-Ebene). Im weiteren Verlauf werden die Parameter für die Durchführung des Kreisformtests vorgegeben. Dies sind insbesondere Durchmesser D, Mittelpunkt C, Toleranzband T, Vorschubgeschwindigkeit F und -richtung (in oder gegen Uhrzeigersinn), wodurch der vorgegebene Kreispfad P festgelegt wird (vgl. FIG 6).

Die FIG 7 zeigt die mittels der genannten Parameter ermittelten tatsächlichen Positionswerte des von der Maschine beschriebenen Kreises, also die gemessene Kontur M, die vom idealen Pfad P abweichen kann. Außerdem ist eine mögliche Verschiebung C-Offset gegenüber dem angegeben Kreismittelpunkt C angezeigt. Es besteht nun die Möglichkeit einer Archivierung der ermittelten Daten, wobei dazu die Daten mit einem Identifizierungscode I der getesteten Maschine und eventuell auch des Endkunden verknüpft werden.

Auf der Grundlage der so ermittelten Unregelmäßigkeiten lassen sich nun automatisch durch entsprechende Software des Herstellers Korrekturmaßnahmen generieren und als automatische Dienstleistung eine Anpassung oder Kompensation der verursachenden Parameter oder Komponenten der Maschine vornehmen.

Unregelmäßigkeiten der Achsführungen können durch unregelmäßiegen Stromverlauf oder Geschwindigkeitsverlauf (Welligkeitsmessungen) erkannt werden. Instabilitäten des Lagereglers infolge geänderter Reibungsbedingungen können durch das dynamische Positionierverhalten (Überschwingen) erkannt werden. Ziel der Messungen ist es etwa, verschleißbedingte Stillstände der Maschine zu vermeiden, dadurch dass der Verschleiß frühzeitig und automatisiert erkannt wird (Langzeitverschleißdiagnose) und betroffene Teile zum einen rechtzeitig beschafft werden können (zum Beispiel durch automatische Bestellungen über e-sales) und zum anderen dann in geplanten Wartungszeiträumen getauscht werden können.

Bei Verwendung externer Messmittel (z.B. ballbar oder Lasermesssytem) ist ein weiteres Ziel, interne Messsysteme zu eichen, um bei Wiederholungsmessungen auf externe Messmittel verzichten zu können.

Beispielsweise ist bei einem Kreisformtest, der nur das Motormesssystem verwendet, eine Lose in Getrieben oder in der Kugelrollspindel nicht so ohne weiteres erkennbar, während sie unter Verwendung eines ballbar sehr leicht zu sehen ist. Wenn man mehrere Parameter simultan aufzeichnet (z.B. Nachlauf und Ströme zusätzlich zum Messsystem) ist eine Lose, entsprechende Trägheitsverhältnisse vorausgesetzt, trotzdem erkennbar.

Aus dem Vergleich ein und derselben Messgröße aus verschiedenen Quellen (z.B. Wegmesssignal extern, Linearmaßstab oder Motormesssystem) lassen sich weitreichende Rückschlüsse auf den Maschinenzustand ziehen.
- Automatisches Erstellen von Service und Wartungsprotokollen zur lückenlosen Dokumentation der Maschinenhistorie (vgl. die in FIG 7 angezeigte Archivierungsmöglichkeit). Im Problemfall wird damit die Ferndiagnose einer Maschine sehr erleichtert. Konstruktive Probleme können durch Häufigkeitsanalyse bestimmter Fehler frühzeitig erkannt und beseitigt werden.
   Aufbau von Expertennetzwerken über ePS-host über die Bearbeitungsprobleme in unterschiedlichsten Bereichen ausgetauscht werden können. Z.B. können bei Problemen direkt von der Maschine aus Anfragen an einen definierten Kreis anderer Experten adressiert werden.
- Auswertung zur Diagnose von Ausnahme- und Fehlersituationen. Hierbei werden Fehlerlisten, anstehende Alarme, Parameter, die den aktuellen Maschinenzustand zum Zeitpunkt des Eintretens der Störung (wie z.B. der PLC-Status, Zustand der I/O, Soll-Ist-Positionen als Crashmonitor) in der Art eines Flugschreibers ausgezeichnet und stehen sowohl dem Maschinenbetreiber als auch Servicetechnikern des Lieferanten sofort via Web zur Verfügung (Servicehistorie) . Gleichzeitig werden über eine konfigurierbare Liste bestimmte Personen via SMS oder e-Mail von dem Problem in Kenntnis gesetzt. Damit wird es möglich, dem Betreiber eine dialoggeführte Hilfe zur Störungsbeseitigung anzubieten. Falls dies nicht zur Störungsbeseitigung führt, ist zusammen mit oben beschriebenen Standardmessungen eine schnelle und effiziente Ferndiagnose möglich. Wird damit kein Erfolg erzielt wird versucht mit Hilfe einer Multimediafernbedienung das Problem zu lösen. Die Serviceeinsätze vor Ort können dadurch zumindest teilweise ersetzt werden. Im Falle unvermeidbarer Serviceeinsätze können diese besser vorbereitet werden.
   Überwachung von Instandhaltungsplänen durch entsprechenden Datenaustausch zum host. Gegebenenfalls kann bei Nichteinhaltung die Maschine temporär gesperrt werden. Dies kann über entsprechende Quittierungsfunktionen gesteuert werden.
   Visualisierung des NC-Programms in Form von Werkzeugbahnen, Punkten und deren Vernetzung zu einer virtuellen Werkstückoberfläche (Flächenrückführung), die über verschiedene Beleuchtungen aus unterschiedlichen Richtungen und Quellen untersucht werden kann.
   Visualisierung des Steuerungsverhaltens (Interpolierte Punkte, Lagereglerverhalten) in gleicher Weise.
- Kommunikation von Maschinenzustandsdaten zu übergeordneten Systemen wie z.B.: ERP-Systemen mit dem Ziel der Optimierung der Gesamtfertigung und der Verbesserung der Produktionsplanung.
- Sicherung und Archivierung von Konfigurationsdaten, Anwenderdaten und Programmen mit dem Ziel jederzeit auf alle Versionen der Steuerungsdaten zugreifen zu können, um gegebenenfalls Zustände rekonstruieren zu können oder problembehaftete Änderungen zu erkennen (Datenvergleich). Für kleinere Firmen interessante Komplettbackupmöglichkeit via Remoteserver.

Die Produktdaten für Automatisierungskomponenten (Steuerungen, Antriebe) und andere Maschinenkomponenten (Stücklisten, Produktbeschreibungen, etc..) sind jederzeit über ePS-host verfügbar.

Keine Person mit Expertenwissen muss vor Ort an die Maschine geschickt werden, um die beschriebenen Verbesserungen, Optimierungen, etc.. vorzunehmen. Oftmals müssen ohne das erfindungsgemäße System sogar mehrere Personen mit Expertenwissen zur Maschine entsandt werden. Mit dieser Erfindung wird das Expertenwissen via Internet an die Maschine gebracht und an der Maschine steht nur der Maschinenbediener zur Bestätigung eventueller Maschinen(fahr)befehle zur Verfügung.

Der Einsatz eines Browsers 23 (vgl. FIG 4) ist nicht zwingend erforderlich, es kann auch eine direkte Verbindung zum Internet oder ein anderes Kommunikationsnetzwerk erfolgen. Hinsichtlich der oben erwähnten Trace-Funktionalität sei noch erwähnt, dass eine solche Funktion i. d. R. Steuerungs- und Antriebsdaten besonders optimal liefert. Ob eine solche Funktionalität jedoch direkt oder unter Einbeziehung zusätzlicher Dienste oder Module vorgesehen wird, hängt in der Regel von der Anwendung ab. Man unterscheidet i. d. R. zwischen einer so genannten "normalen" Trace-Funktionalität, bei der ein trace zu fest definierten Zeitpunkten oder Ereignissen begonnen und beendet wird. Ein Transfer von erfassten Maschinenzustandsdaten wird dann nur angestoßen, sobald der trace beendet ist. Alternativ dazu besteht die Möglichkeit, eine so genannte "endlose" Trace-Funktionalität vorzusehen. In diesem Fall läuft der trace als Anwendung im Hintergrund und es erfolgt ein kontinuierlicher Transfer erfasste Daten weg vom Arbeitsrechner (z.B. zu einem HMI) .

Eine Trace-Funktionalität erhält i. d. R. nur Lese-Zugriff auf den Steuerungskern NCK. Ein Schreib-Zugriff, z. B. durch einen Funktionsgenerator, steht im Widerspruch zu der üblichen Definition einer Trace-Funktionalität und muss deshalb i. d. R. als zusätzliche Funktion zu der üblichen Trace-Funktionalität hinzugefügt werden. Dies ist beispielsweise dann erforderlich, wenn für bestimmte automatisierte Prozeduren ein Funktionsgenerator und eine Trace-Funktionalität als extern gekoppelte Funktionen realisiert werden müssen.

Die Konfiguration einer Trace-Funktionalität kann i. d. R. offline erfolgen. Sobald ein trace jedoch angestoßen wurde, können die Bedingungen im laufenden Betrieb nicht geändert werden. Dazu muss der trace erst gestoppt oder abgebrochen werden.

Mögliche Funktionen für einen trace im Rahmen der vorliegenden Erfindung sind zum Beispiel die Kommissionierung einer Maschine, Fehlererkennung, Probleme mit Applikationen (vor allem bei komplexen Applikationen mit mehreren Kanälen und synchronen Aktionen), sporadische Probleme zur Laufzeit der Maschine, Werkzeugbruch oder logische Analysen wie z. B. aus Teleskop- oder Tachometerfunktionen.

Für die zu erfassenden Maschinenzustandesdaten existieren je nach Anwendung eine Vielzahl von zu erfassenden Informationen. Diese schließen unter anderem ein:
- Systemvariablen, Antriebssignale, PLC flags sowie verschiedene Arten von Ereignissen wie Status, Statusänderungen oder binäre Signale wie beispielsweise Alarmsignale etc.;
- Zugang zu lokalen Benutzerprogrammdaten (z. B. NC Programm, flags im PLC Programm);
- übertragen von erfassten lokalen Daten in geeignete globale Variablen.

All diese beispielhaft genannten Daten können als Auslöser für die Ablaufverfolgung bzw. Trace-Funktionalität dienen.

Unter bestimmten Umständen können spezielle Anforderungen zur Durchführung einer Ablaufverfolgung bzw. Trace-Funktionalität bestehen, z. B. im Zusammenhang mit PLC-Daten. Für einen Zugriff auf PLC-Peripherie oder Signale bzw. flags in einem Benutzerprogramm kann es vorteilhaft sein, wenn dies ohne einen Einfluss auf die PLC selbst möglich ist. Vor allem der Zugriff auf Benutzerprogrammdaten (IO, flags etc.) und die Möglichkeit einer Synchronisierung des Startpunktes für eine Aufzeichnung von Maschinenzustandsdaten über ein Benutzerprogramm ist gemäß einer weiteren Ausführungsform der Erfindung vorteilhaft. Eine andere vorteilhafte Ausführung der Erfindung schließt bis zu 32 PLC-Signale ein, die zur gleichen Zeit im Rahmen einer Ablaufverfolgung bzw. Trace-Funktionalität überwacht werden können. Hierzu können auch vorteilhaft verfügbare Pufferdaten in einem Benutzerprogramm abgelegt werden.

Eine Erfassung von Maschinenzustandsdaten erfolgt vorteilhaft zugeschnitten auf den bedienten automatischen Dienst. Besonders effektiv erfolgt dies, wenn nur benötigte Informationen erfasst werden und dies nicht öfter als notwendig. Auch sollte eine klare Unterscheidung zwischen kontinuierlichen Signale und sporadischen Ereignissen getroffen werden. Sofern möglich wird eine Datenkomprimierung während der Erfassung durchgeführt, jedoch unter Berücksichtigung von Laufzeiteffekten. Lediglich für den Fall, dass nicht bekannt oder definiert ist, wofür die zu erfassenden Daten benötigt werden, wird das gesamte Spektrum an Maschineninformationen erfasst.

In Abhängigkeit von der Applikation werden z. B. Ringpufferspeicher bevorzugt, bei denen prinzipbedingt die ältesten bzw. am weitesten zurückliegenden Informationen überschrieben werden, während bei einem Warteschlangen-Speicher bzw. einer sog. queue stets die neueste Information überschrieben wird, wenn die Warteschlange voll ist.

Weitere ergänzende Informationen könnten z.B. in einem Zeitstempel oder Werten von Zeitzählern etc.. bestehen. Im Fall der Analyse der Ursachen von schwerwiegenden Fehlern wird die Durchführung der Ablaufverfolgung bzw. Trace-Funktionalität möglichst unabhängig von der Fehlfunktion erfolgen. D.h. im fortgesetzten Betrieb nach einem Fehler werden vor dem Fehler erfasste Daten sicher gespeichert. Im Idealfall wird jede zu erfassende Variable im Zusammenhang mit den Maschinenzustandsdaten als eigene Funktion mit eigener Zeitcharakteristik vorgesehen, um das Datenaufkommen möglichst gering zu halten.

Nach einer weiteren vorteilhaften Ausgestaltung der Erfindung erfolgt die Erfassung von Maschinezustandsdaten zeitgesteuert oder Ereignis gesteuert. Auch kann automatisch eine zusätzliche Datei oder ein zusätzliches Archiv erzeugt werden, dass vorzugsweise auch Unterprogramme enthalten kann. In einer trace-Datei wird dann eine Referenz, z.B. ein Zeiger, auf dieses Archiv bzw. diese Datei gesetzt. Auf diese Weise kann man von vornherein möglichen Inkonsistenzen im Zusammenhang mit einer manuellen Implementierung einer solchen Funktion vorbeugen. So kann eine manuelle Archivierung auch mehrere Tage nach der Datenerfassung erfolgen, wobei sich in dieser Zeit die Konfiguration bereits geändert haben kann. Dies kann auch durch eine spezielle Anwendung spezifiziert werden, wodurch erreicht wird, das Bedingungen nicht durch interne Schnittstellen erfüllt werden müssen.

Nach einer weiteren vorteilhaften Ausgestaltung der vorliegenden Erfindung werden Veränderungen in der Konfiguration von verteilten Komponenten automatisch vorgenommen. Dies gilt auch für die Erfassung und Bereitstellung von verfügbaren Meta-Informationen (Daten über Daten). Die Mensch-Maschine-Schnittstelle HMI kann in diesem, Zusammenhang als Interface für eine interne Konfiguration dienen. Dadurch lässt sich auch eine einfachere kostengünstige Erweiterung für neue Signale schaffen, indem diese einfach über die HMI-Schnittstelle mit einer Ablaufverfolgung bzw. Trace-Funktionalität verknüpft werden (so genanntes merge).

Eine mögliche Vorgehensweise zur Steuerung des vorangehend Geschilderten stellt vorzugsweise die folgenden Funktionen bereit:

Startbedingungen (manuell, NC-Programm, PLC, synchronisiert, zeitgesteuert, kontinuierlich oder über externe Signale) und Stopp/trigger-Bedingungen (manuell, NC-Programm, PLC, synchronisiert, zeitgesteuert, Überlauf durch interne Addierungen oder über externe Signale).

Solche trigger-Bedingungen sind vorzugsweise innerhalb von gewissen Zuständen zusetzen:
- z.B. trigger durch einzelne Bits, durch Änderung in Zustandsvariablen von einem Zustand Z1 in einem Zustand Z2 (genau definierte Zustandsübergänge) oder durch Text an Stelle von Zahlen-Codes;
- durch trigger in Form von eindeutig definierten NC-Programm-Befehlen bzw. zugeordneten Befehlsnummern;
- trigger durch das n-te Auftreten eines vorgegebenen relevanten Codes.

Verschachtelte Bedingungen sind ebenfalls möglich wie z. B.: Bedingungen A muss erfüllt sein, dann Bedingungen B oder Bedingung C, und, sofern Bedingung E erfüllt ist, werden Daten erfasst bis Bedingung F eintritt. Nach einem Unfall (z. B. Werkzeugbruch) oder einem Stopp wird dafür gesorgt, dass alle erforderlichen Ressourcen möglichst verfügbar sind, sobald Daten übertragen werden. Sobald ein kritischer Fehler aufgetreten ist, ist es bedeutsam, dass eine mit diesem Fehler verbundene Bedingung definiert ist, so dass ein automatische Wiederanlauf ausgeschlossen ist.

Eine geeignete Aufbereitung von Daten erfolgt vorzugsweise an der Mensch-Maschine-Schnittstelle HMI. Auch ist es je nach Bedarf möglich, eine Anwendung exklusiv an eine Datei zu binden. Im Übrigen ist eine serielle COM-Verbindung möglich, um blockweisen Zugriff über einen kontinuierlichen Datenstrom zu ermöglichen (ohne Zwischenspeicherung in der Datei). Es können und sollen u.a. drei verschiedene Benutzungs-Klassen bedient werden:
- 20: vorbereitete Benutzung wie Anwendungen von Steuerungssoftwareherstellern an der Mensch-Maschine-Schnittstelle HMI wie z. B. eine Visualisierung einer Ablaufverfolgung, IBN oder Diagnosewerkzeuge
- 21: OEM-Benutzer (Arbeitsrechner- bzw. client-Applikationen)
- 22: Internet bzw. Web basierte Dienste

Eine Ablaufverfolgung hat vorzugsweise eine für den Benutzer offene Struktur. Offene und frei zugängliche Schnittstellen für die Konfiguration beinhalten Steuerungen (Start, Stopp) und Analysemöglichkeiten (Daten Format) für OEMs.

Nach einer weiteren vorteilhaften Ausführung der Erfindung erfolgt die Anzeige einer Ablaufverfolgung vergleichbar einem Logik-Analysator-Oszilloskop. Damit können Signale verschiedener Quellen angezeigt werden. Außerdem können Referenzen zu einem bestimmten Programmmodul angezeigt werden. Vorteilhafterweise werden auch Cursor- und Zoom-Funktionen bereitgestellt. Günstig ist es, wenn wenigstens vier Signale gleichzeitig sichtbar gemacht werden können. Außerdem werden vorzugsweise Filter bereitgestellt, die eine Auswahl von Signalen erlaubten. Des weiteren können Differenzsignale ausgegeben werden oder wichtige Ereignisse zugeordnet werden, wodurch Benutzer mit geringen Kenntnissen ein besseres Verständnis der erfassten Informationen bzw. Maschinenzustandsdaten erlangen.

Um zu gewährleisten, dass eine hohe Robustheit bei der Datenerfassung gewährleistet wird, sind folgende Möglichkeiten besonders geeignet:
- soweit möglich sollten Daten auch nach einem Defekt zugänglich sein.
- plötzliche Fehler während einer Ablaufverfolgung sollten nicht in einem data overflow resultieren und geeignete Reaktionen im Fall von knappen Ressourcen sollten vorgesehen sei.
- nach Eintritt eines Fehlers wird gewährleistet, dass Dateien mit erfassten Maschinenzustandsdaten nicht zu einem späteren Zeitpunkt gelöscht werden können.

Im Folgenden wird noch eine Auswahl von möglichen Diensten oder Dateninhalten aufgelistet:
Maschinenbezogene Services wie
   - Analyse von Maschinenbetriebszeiten, -ausfallzeiten und -kapazitäten
Achsanalysen wie
   - Einzelanalyse, Status
   - Simulation von Achsen
   - Messung der Amplituden
Fouriertransformation und Erzeugung von Bode-Diagrammen mit
   - Identifikation von Eigenfrequenzen
   - Trendanalysen
Achsoptimierungen und Optimierungen von Achsparametern wie
   - Einrückgeschwindigkeit
   - Beschleunigung
   - Ruck
   - Filter
   - KV-Faktor
   - Reibungskompensation
   - Losekompensation
Überprüfung von Maschinendaten wie
   - Genauigkeit und Konsistenz
   - Konsistenz der Datenspeicher
   - Konsistenz von Funktionen und Maschinendaten
Verschleißanalyse wie
   - Pfadgenauigkeit
   - Trendanalysen
   - zunehmendes Spiel der Gelenke
   - Reibungsprobleme (z.B. Schmierung)
   - Übertragungsprobleme zwischen Motoren und Achsen
Überwachung von Prozessen mit z.B.
   - Antriebsparametern
   - momentane Auslastung bzw. Kapazität
   - Momente
   - Ruck
   - Drehzahl
   - Temperaturen
   - Trendanalysen
Maschineninspektionen mit
   - Kreisformtests
   - Messungen der Steifigkeiten von
   - Linearachsen
   - C-Achsen
Maschinenkalibrierungen mit
   - Tastlehre
   - Einzel-Achsen-Kalibrierung
   - C-Achs-Kalibrierung
   - Werkstückmessungen
Werkstückbezogene Services mit
   - Werkstückgeometrie
   - Messung der Spurtreue
   - Trace-Funktionalität in Bezug auf das aktuelle Ziel in tabellarischer oder graphischer Form
   - Werkstückoberfläche und -qualität
Prozessanalysen mit
   - Bestimmung und Dokumentation der Vorschubgeschwindigkeit und Schnittgeschwindigkeit
   - Messung der Schnittkraft über z.B.
   - Laserleistung
   - Fouriertransformation und Frequenzbetrachtung
Softwareverkauf und -vertrieb mit
   - Lieferung neuer Versionen
   - Lieferung von Fehlerkorrekturen (service packs)
   - Lieferung von Kommunikationssoftware und- hardware für Dienstleistungsangebote

Die Erfindung betrifft weiterhin die Verwendung eines Verfahrens zur rechnergestützten Erzeugung und Bereitstellung von maschinenbezogenen Daten und/oder Diensten zur Durchführung einer Untermenge der folgenden Maßnahmen:
- Elektronisches Vermessen von Werkstücken, Werkzeugen und Aufspannungen zur Diagnose von Problemen bei mangelnder Werkstückqualität oder zur dialoggeführten Korrektur der Verhältnisse,
- Aufzeigen der Zusammenhänge von Prozessvariablen wie Laserleistung, Vorschubgeschwindigkeit oder Werkzeugdrehzahl und Vorschubgeschwindigkeit,
- Analyse der Werkzeugbahnen im kartesischen Koordinatensystem mit Korrektur oder Aussage zu Gutteil/Schlechtteil,
- Monitoring von Prozessvariablen mit Grenzwertüberwachung und/oder Korrelationsüberwachung,
- Programmanalyse durch Abarbeiten eines Programms in einer virtuellen Nachbildung der Bearbeitungsmaschine,
- Automatisches Erstellen von Inbetriebnahmeprotokollen zur lückenlosen Dokumentation des Inbetriebnahmezustandes,
- Automatisches Erstellen von Service und Wartungsprotokollen zur lückenlosen Dokumentation der Maschinerihistorie,
- Auswertung zur Diagnose von Ausnahme- und Fehlersituationen,
- Sicherung und Archivierung von Konfigurationsdaten, Anwenderdaten und Programmen zur Rekonstruktion von Zuständen oder zur Erkennung problembehafteter Änderungen.

## Patentansprüche

1. Verfahren zur rechnergestützten Erzeugung und Bereitstellung von maschinenbezogenen Daten und/oder Diensten für eine numerisch gesteuerte industrielle Bearbeitungsmaschine (20), wobei ein Hauptrechner (8) und ein maschinenseitiger Arbeitsrechner (21) über eine Datenkommunikationsverbindung (14) kommunizieren, mit den folgenden Verfahrensschritten:
- Erfassung von Maschinenzustandsdaten auf Seiten des Arbeitsrechners,
- Übertragung der erfassten Maschinenzustandsdaten über die Datenkommunikationsverbindung (14) zum Hauptrechner,
- Erzeugung von maschinenbezogenen Daten und/oder Diensten auf Seiten des Hauptrechners in Abhängigkeit solcher Maschinenzustandsdaten und
- Bereitstellung dieser maschinenbezogenen Daten und/oder Dienste an den Arbeitsrechner bzw. dessen Benutzer,
**dadurch gekennzeichnet, dass**
das Verfahren ausgebildet ist zur Erzeugung und Bereitstellung einer Mehrzahl verschiedener Arten von Daten und/oder Diensten und ferner folgende Verfahrensschritte enthalten sind:
- Übertragung von Informationen zur Verfügbarkeit von maschinenbezogenen Daten und/oder Diensten vom Hauptrechner zum Arbeitsrechner,
- Empfang einer Anforderung nach maschinenbezogenen Daten und/oder einem Dienst vom Arbeitsrechner auf Seiten des Hauptrechners,
- Übertragung von Informationen mit Bezug zu vom Arbeitsrechner zu erfassenden benötigten Maschinenzustandsdaten vom Hauptrechner zum Arbeitsrechner,
wobei die Erfassung von Maschinenzustandsdaten auf Seiten des Arbeitsrechners erfolgt unter Bestimmung von Messdaten mit Bezug auf den dem Kunden bereitgestellten Dienst, wobei ferner die Übertragung der erfassten Maschinenzustandsdaten über die Datenkommunikationsverbindung zum Hauptrechner erfolgt unter Empfang von Daten des Arbeitsrechners beinhaltend die benötigten Maschinenzustandsdaten auf Seiten des Hauptrechners, wobei ferner die Erzeugung von maschinenbezogenen Daten und/oder Diensten auf Seiten des Hauptrechners in Abhängigkeit solcher Maschinenzustandsdaten erfolgt unter Erzeugung der vom Arbeitsrechner angeforderten maschinenbezogenen Daten und/oder des angeforderten Dienstes durch den Hauptrechner, und wobei ferner die Bereitstellung dieser maschinenbezogenen Daten und/oder Dienste an den Arbeitsrechner bzw. dessen Benutzer erfolgt unter Übertragung der vom Arbeitsrechner angeforderten maschinenbezogenen Daten und/oder des angeforderten Dienstes vom Hauptrechner zum Arbeitsrechner.

2. Verfahren zur rechnergestützten Erzeugung und Bereitstellung von maschinenbezogenen Daten und/oder Diensten nach Anspruch 1, wobei Maschinenzustandsdaten auf Seiten des Arbeitsrechners (21) in Echtzeit erfasst werden.

3. Verfahren zur rechnergestützten Erzeugung und Bereitstellung von maschinenbezogenen Daten und/oder Diensten nach Anspruch 1 oder 2, wobei ein mit dem maschinenseitigen Arbeitsrechner (21) assoziiertes eindeutiges Identifizierungsmittel, insbesondere ein Identifizierungscode, zum Hauptrechner (8) übertragen wird.

4. Verfahren zur rechnergestützten Erzeugung und Bereitstellung von maschinenbezogenen Daten und/oder Diensten nach Anspruch 3, wobei der Hauptrechner (8) von einem Arbeitsrechner (21) empfangene Maschinenzustandsdaten diesem Arbeitsrechner anhand des Identifizierungsmittel zuordnet.

5. Verfahren zur rechnergestützten Erzeugung und Bereitstellung von maschinenbezogenen Daten und/oder Diensten nach einem der vorangehenden Ansprüche 1 bis 4, wobei die Maschinenzustandsdaten Programmdaten oder Servodaten oder Motordaten oder Umrichterdaten oder Positionsdaten oder Sensordaten umfassen.

6. Verfahren zur rechnergestützten Erzeugung und Bereitstellung von maschinenbezogenen Daten und/oder Diensten nach einem der vorangehenden Ansprüche 1 bis 5, wobei der Arbeitsrechner (21) die erfassten Maschinenzustandsdaten in einem Speichermittel zwischenspeichert, bevor diese an den Hauptrechner (8) übertragen werden.

7. Verfahren zur rechnergestützten Erzeugung und Bereitstellung von maschinenbezogenen Daten und/oder Diensten nach Anspruch 6, wobei in dem Speichermittel abgelegte Maschinenzustandsdaten zeitgesteuert oder ereignisgesteuert über die Datenkommunikationsverbindung (14) an den Hauptrechner (8) übertragen werden.

8. Verfahren zur rechnergestützten Erzeugung und Bereitstellung von maschinenbezogenen Daten und/oder Diensten nach einem der vorangehenden Ansprüche 1 bis 7, wobei auf Seiten des Hauptrechners (8) eine automatische Analyse bzw. Auswertung empfangener Maschinenzustandsdaten erfolgt.

9. Verfahren zur Erstellung einer Datenbank mit maschinenbezogenen Daten für eine Mehrzahl von industriellen Bearbeitungsmaschinen, wobei ein gemeinsamer Hauptrechner (8) für eine Mehrzahl von den industriellen Bearbeitungsmaschinen zugeordneten Arbeitsrechnern (21) eine rechnergestützte Erzeugung und Bereitstellung von maschinenbezogenen Daten und/oder Diensten nach einem der vorangehenden Ansprüche 4 bis 8 vornimmt, wobei in einem Speichermittel ein Datensatz mit den Maschinenzustandsdaten eines der Arbeitsrechner (21) erzeugt wird und der diesem Arbeitsrechner zugeordnete eindeutige Identifizierungscode bestimmt und in den Datensatz eine dem Identifizierungscode entsprechende Information angefügt wird.

10. Verfahren zur rechnergestützten Bereitstellung von maschinenbezogenen Daten und/oder Diensten von einem Hauptrechner eines Dienste-Anbieters zu einem Arbeitsrechner einer Bearbeitungsmaschine eines Kunden über ein Netzwerk nach einem der Ansprüche 1 bis 9, wobei der Hauptrechner (8) vom Arbeitsrechner (21) Informationen bezüglich einer Bezahlung angeforderter maschinenbezogener Daten und/oder Dienste empfängt und speichert.

11. Verfahren zur rechnergestützten Bereitstellung von maschinenbezogenen Daten und/oder Diensten nach Anspruch 9 oder 10, insbesondere zur rechnergestützten Bereitstellung von Service-Diensten zu Optimierungszwecken, mit den folgenden weiteren Verfahrensschritten:
- Erzeugung einer Datenstruktur zur Aufnahme von Daten mit Bezug auf einen Service-Dienst,
- Speichern erster Daten in der Datenstruktur, welche die Identität eines Kunden repräsentieren, insbesondere des eindeutigen Identifizierungscodes und
- Speichern weiterer Daten in der Datenstruktur, welche die Identität des Service-Dienstes repräsentieren.

12. Verfahren zur rechnergestützten Bereitstellung von maschinenbezogenen Daten und/oder Diensten nach Anspruch 11, insbesondere zur rechnergestützten Bereitstellung von Service-Diensten zu Optimierungszwecken, mit den folgenden weiteren Verfahrensschritten:
Speichern weiterer Daten in der Datenstruktur, welche die Messdaten repräsentieren.

13. Verfahren zur rechnergestützten Bereitstellung von maschinenbezogenen Daten und/oder Diensten nach einem der Ansprüche 10 bis 12, mit den folgenden weiteren Verfahrensschritten zur Erfassung von Preisinformationen zur Bezahlung:
- Bestimmen einer ersten Preisinformation als Fixkosten eines vorgegebenen wiederkehrenden Zeitraums, insbesondere eines Monatszeitraums,
- Bestimmen einer zweiten Preisinformation als variable Kosten in Abhängigkeit eines bereitgestellten Dienstes.

14. Vorrichtung zur rechnergestützten Bereitstellung von maschinenbezogenen Daten und/oder Diensten auf einem Hauptrechner (8) eines Dienste-Anbieters für einen Arbeitsrechner (21) einer Bearbeitungsmaschine (20) eines Kunden über ein Netzwerk (14), mit einem System zur rechnergestützten Handhabung und Verwaltung einer numerisch gesteuerten industriellen Bearbeitungsmaschine mit den folgenden Merkmalen:
- einen Hauptrechner zur Erzeugung und Bereitstellung von maschinenbezogenen Daten und/oder Diensten und
- einen maschinenseitigen Arbeitsrechner (21), welcher mit dem Hauptrechner über ein Netzwerk (14) verbunden ist, wobei durch den Arbeitsrechner Maschinenzustandsdaten erfassbar sind und an den Hauptrechner übertragbar sind, wobei der Arbeitsrechner der Bearbeitungsmaschine des Kunden über ein System zur Steuerung und/oder Kontrolle der Bearbeitungsmaschine und einen geeigneten Sensor (16) zur Erfassung von Maschinenzustandsdaten verfügt und mit dem Netzwerk verbunden ist, mit den folgenden weiteren Merkmalen auf Seiten des Hauptrechners:
- einem Mittel zur Übertragung
- von Informationen zur Verfügbarkeit von maschinenbezogenen Daten und/oder Diensten vom Hauptrechner zum Arbeitsrechner und von
- Informationen mit Bezug zu vom Arbeitsrechner zu erfassenden benötigten Maschinenzustandsdaten vom Hauptrechner zum Arbeitsrechner und
- der vom Arbeitsrechner angeforderten maschinenbezogenen Daten und/oder des angeforderten Dienstes vom Hauptrechner zum Arbeitsrechner und
- einem Mittel zum Empfang
- einer Anforderung nach maschinenbezogenen Daten und/oder einem Dienst vom Arbeitsrechner auf Seiten des Hauptrechners und
- von Daten des Arbeitsrechners beinhaltend die benötigten Maschinenzustandsdaten auf Seiten des Hauptrechners und
- einem Mittel zur Erzeugung der vom Arbeitsrechner angeforderten maschinenbezogenen Daten und/oder des angeforderten Dienstes durch den Hauptrechner.

15. Vorrichtung zur rechnergestützten Bereitstellung von maschinenbezogenen Daten und/oder Diensten auf einem Hauptrechner (8) eines Dienste-Anbieters nach Anspruch 14, wobei das Mittel zur Erzeugung der vom Arbeitsrechner (21) angeforderten maschinenbezogenen Daten und/oder des angeforderten Dienstes durch den Hauptrechner (8) einen Internet-Web-Server umfasst und der Hauptrechner geeignet programmiert ist, um damit Internet-Web-Seiten zu erzeugen.

16. Vorrichtung zur rechnergestützten Bereitstellung von maschinenbezogenen Daten und/oder Diensten auf einem Hauptrechner (8) eines Dienste-Anbieters nach Anspruch 14 oder 15, wobei der Arbeitsrechner (21) des Kunden ein eindeutiges Identifizierungsmittel, insbesondere einen Identifizierungscode, für die Bearbeitungsmaschine (20) aufweist und wobei der Hauptrechner (8) über ein Speichermittel, insbesondere eine Datenbank, zur Aufnahme von Informationen des Arbeitsrechners in Verbindung mit dem Identifizierungscode verfügt.

17. Vorrichtung zur rechnergestützten Bereitstellung von Service-Diensten für ein Automatisierungssystem über ein Netzwerk (14), mit einem System zur rechnergestützten Handhabung und Verwaltung einer numerisch gesteuerten industriellen Bearbeitungsmaschine (20) nach einem der vorangehenden Ansprüche 14 bis 16, mit den folgenden Merkmalen:
- einem Mittel (22) zum Laden von Instruktionen (24, 25) auf das Automatisierungssystem, wobei die Instruktionen mindestens eine Funktion oder einen anderen Aspekt des Automatisierungssystems steuern,
- einem Mittel (23) zum Empfang von kundenbezogenen Systemdaten vom Automatisierungssystem über das Netzwerk, wobei solche Systemdaten in Abhängigkeit von den geladenen Instruktionen gesammelt werden,
- einem Mittel zur Generierung von geeigneten Service-Diensten für das Automatisierungssystem in Abhängigkeit der gesammelten kundenbezogenen Systemdaten und
- einem Mittel zur Übertragung solcher Service-Dienste zum Automatisierungssystem des Kunden über das Netzwerk.

18. Vorrichtung zur rechnergestützten Bereitstellung von Service-Diensten für ein Automatisierungssystem über ein Netzwerk nach Anspruch 17, mit einem Mittel zur Bereitstellung einer Auswahl von Optionen des Service-Dienstes an das Automatisierungssystem des Kunden über das Netzwerk.

19. Vorrichtung zur rechnergestützten Bereitstellung von Service-Diensten für ein Automatisierungssystem über ein Netzwerk nach Anspruch 18, mit einem Mittel zur Auswahl einer der Optionen des Service-Dienstes auf Seiten des Automatisierungssystems des Kunden.

20. Vorrichtung zur rechnergestützten Bereitstellung von Service-Diensten für ein Automatisierungssystem über ein Netzwerk, nach einem der vorangehenden Ansprüche 14 bis 19, wobei das Automatisierungssystem über ein Netzwerk-Interface zur Kommunikation über das Netzwerk und zum Empfang der Dienst-Informationen verfügt und ein Mittel (22) zur Erzeugung von maschinenausführbaren Programmabläufen (24, 25) auf Basis der empfangenen Dienste vorgesehen ist, wobei das Netzwerk-Interface und das Mittel zur Erzeugung von maschinenausführbaren Programmabläufen über ein vorgegebenes Datenformat Daten austauschen.

21. Vorrichtung zur rechnergestützten Bereitstellung von Service-Diensten für ein Automatisierungssystem über ein Netzwerk, nach Anspruch 20, wobei das Netzwerk-Interface einen Internet-Browser (23) umfasst.

## Claims

1. Method for computer-aided production and provision of machine-related data and/or services for a numerically controlled industrial processing machine (20), a main computer (8) and a machine-side working computer (21) communicating via a data communication link (14), having the following method steps:
- acquisition of machine state data on the part of the working computer,
- transmission of the acquired machine state data via the data communication link (14) to the main computer,
- production of machine-related data and/or services on the part of the main computer as a function of such machine state data and
- provision of these machine-related data and/or services to the working computer or its user, **characterized in that** the method is designed to produce and provide a plurality of different types of data and/or services and further contains the following method steps:
- transmission of information relating to the availability of machine-related data and/or services from the main computer to the working computer,
- receipt of a request for machine-related data and/or a service from the working computer on the part of the main computer,
- transmission of information with reference to requisite machine state data to be acquired by the working computer from the main computer to the working computer,
the acquisition of machine state data taking place on the part of the working computer by determination of measured data with reference to the service provided to the customer, the transmission of the acquired machine state data furthermore taking place via the data communication link to the main computer by receipt of data from the working computer containing the requisite machine state data on the part of the main computer, the generation of machine-related data and/or services furthermore taking place on the part of the main computer as a function of such machine state data by virtue of the main computer generating the machine-related data requested by the working computer and/or the requested service and the provision of these machine-related data and/or services to the working computer or its user furthermore taking place by transmission of the machine-related data requested by the working computer and/or the requested service from the main computer to the working computer.

2. Method for computer-aided production and provision of machine-related data and/or services according to Claim 1, machine state data being acquired in real time on the part of the working computer (21).

3. Method for computer-aided production and provision of machine-related data and/or services according to Claim 1 or 2, a unique identification means, in particular an identification code, associated with the machine-side working computer (21) being transmitted to the main computer (8).

4. Method for computer-aided production and provision of machine-related data and/or services according to Claim 3, the main computer (8) allocating machine state data received from a working computer (21) to this working computer by using the identification means.

5. Method for computer-aided production and provision of machine-related data and/or services according to one of the preceding Claims 1 to 4, the machine state data comprising program data or servo data or motor data or converter data or position data or sensor data.

6. Method for computer-aided production and provision of machine-related data and/or services according to one of the preceding Claims 1 to 5, the working computer (21) buffering the acquired machine state data in a storage means before said data are transmitted to the main computer (8).

7. Method for computer-aided production and provision of machine-related data and/or services according to Claim 6, machine state data stored in the storage means being transmitted via the data communication link (14) to the main computer (8) under time control or event control.

8. Method for computer-aided production and provision of machine-related data and/or services according to one of the preceding Claims 1 to 7, automatic analysis or evaluation of received machine state data being carried out on the part of the main computer (8).

9. Method of creating a database with machine-related data for a plurality of industrial processing machines, a common main computer (8) performing computer-aided production and provision of machine-related data and/or services according to one of the preceding Claims 4 to 8 for a plurality of working computers (21) allocated to the industrial processing machines, a data set with the machine state data from one of the working computers (21) being generated in a storage means and the unique identification code associated with this working computer being determined, and an item of information corresponding to the identification code being appended to the data set.

10. Method for computer-aided provision of machine-related data and/or services from a main computer of a service provider to a working computer of a processing machine of a customer via a network according to one of Claims 1 to 9, the main computer (8) receiving and storing information with respect to a payment for requested machine-related data and/or services from the working computer (21).

11. Method for computer-aided provision of machine-related data and/or services according to Claim 9 or 10, in particular for computer-aided provision of services for optimization purposes, having the following further method steps:
- generation of a data structure to accommodate data with reference to a service,
- storage of first data in the data structure, which represent the identity of a customer, in particular of the unique identification code, and
- storage of further data in the data structure, which represent the identity of the service.

12. Method for computer-aided provision of machine-related data and/or services according to Claim 11, in particular for computer-aided provision of services for optimization purposes, having the following further method steps:
storage of further data in the data structure, which represent these measured data.

13. Method for computer-aided provision of machine-related data and/or services according to one of Claims 10 to 12, having the following further method steps for registering price information for payment:
- determination of a first item of price information as fixed costs of a predetermined repeated time period, in particular a monthly time period,
- determination of a second item of price information as variable costs as a function of a service provided.

14. Apparatus for computer-aided provision of machine-related data and/or services on a main computer (8) of a service provider for a working computer (21) of a processing machine (20) of a customer via a network (14), with a system for computer-aided handling and management of a numerically controlled industrial processing machine having the following features:
- a main computer for producing and providing machine-related data and/or services and
- a machine-side working computer (21) which is connected to the main computer via a network (14), wherein the working computer can capture machine state data and can transmit them to the main computer, the working computer of the processing machine of the customer having a system for the control and/or monitoring of the processing machine and a suitable sensor (16) for acquiring machine state data and being connected to the network, having the following further features on the part of the main computer:
- a means for transmitting
- information relating to the availability of machine-related data and/or services from the main computer to the working computer and
- information with reference to requisite machine state data to be acquired by the working computer from the main computer to the working computer and
- the machine-related data requested by the working computer and/or the requested service from the main computer to the working computer and
- a means for the receipt
- of a request for machine-related data and/or a service from the working computer on the part of the main computer and
- of data from the working computer containing the requisite machine state data on the part of the main computer and
- a means for generating the machine-related data requested by the working computer and/or the requested service by the main computer.

15. Apparatus for computer-aided provision of machine-related data and/or services on a main computer (8) of a service provider according to Claim 14, the means for generating the machine-related data requested by the working computer (21) and/or the requested service by means of the main computer (8) comprising an Internet web server and the main computer being suitably programmed to use it to produce Internet web pages.

16. Apparatus for computer-aided provision of machine-related data and/or services on a main computer (8) of a service provider according to Claim 14 or 15, the working computer (21) of the customer having a unique identification means, in particular an identification code, for the processing machine (20), and the main computer (8) having a storage means, in particular a database, to accommodate information from the working computer in conjunction with the identification code.

17. Apparatus for computer-aided provision of services for an automation system via a network (14), with a system for computer-aided handling and management of a numerically controlled industrial processing machine (20) according to one of the preceding Claims 14 to 16, having the following features:
- a means (22) for loading instructions (24, 25) onto the automation system, the instructions controlling at least one function or another aspect of the automation system,
- a means (23) for receiving customer-related system data from the automation system via the network, such system data being collected as a function of the loaded instructions,
- a means for generating suitable services for the automation system as a function of the collected customer-related system data and
- a means for transmitting such services to the automation system of the customer via the network.

18. Apparatus for computer-aided provision of services for an automation system via a network according to Claim 17, having a means for providing a selection of options of the service to the automation system of the customer via the network.

19. Apparatus for computer-aided provision of services for an automation system via a network according to Claim 18, having a means for selecting one of the options of the service on the part of the automation system of the customer.

20. Apparatus for computer-aided provision of services for an automation system via a network, according to one of the preceding Claims 14 to 19, the automation system having a network interface for communication via the network and for receiving the service information, and a means (22) being provided for generating machine-executable program sequences (24, 25) on the basis of the received services, the network interface and the means for generating machine-executable program sequences exchanging data via a predefined data format.

21. Apparatus for computer-aided provision of services for an automation system via a network according to Claim 20, the network interface comprising an Internet browser (23).

## Revendications

1. Procédé de production assistée par ordinateur et de mise à disposition de données se rapportant à une machine et/ou des services pour une machine ( 20 ) industrielle de traitement à commande numérique, dans lequel un ordinateur ( 8 ) principal et un ordinateur ( 21 ) de travail côté machine communiquent par une liaison ( 14 ) de communication de données, comprenant les stades de procédé suivants :
- on relève des données d'état de la machine du côté de l'ordinateur de travail,
- on transmet les données relevées d'état de la machine à l'ordinateur principal par la liaison ( 14 ) de communication de données,
- on produit des données se rapportant à la machine et/ou du côté de l'ordinateur principal en fonction de données d'état de la machine de ce genre, et
- on met ces données se rapportant à la machine et/ou de service à la disposition de l'ordinateur de travail ou de son utilisateur,
**caractérisé en ce que**
le procédé est conçu pour la production et la mise à la disposition d'une multiplicité de types différents de données et/ou de services et a en outre les stades de procédé suivants :
- on transmet des informations sur la disponibilité de données se rapportant à la machine et/ou de services de l'ordinateur principal à l'ordinateur de travail ;
- on reçoit une demande de données se rapportant à la machine et/ou d'un service de l'ordinateur de travail du côté de l'ordinateur principal ;
- on transmet des informations se rapportant aux données d'état de la machine nécessaires à relever par l'ordinateur de travail de l'ordinateur principal à l'ordinateur de travail ;
dans lequel le relevé des données d'état de la machine du côté de l'ordinateur de travail s'effectue en déterminant des données de mesure se rapportant au service mis à disposition du client dans lequel, en outre, la transmission des données relevées d'état de la machine s'effectue vers l'ordinateur principal par l'intermédiaire de la liaison de communication de données en recevant des données de l'ordinateur de travail contenant les données d'état de la machine nécessaires du côté de l'ordinateur principal, la production de données se rapportant à la machine et/ou de services du côté de l'ordinateur principal s'effectuant en fonction de données d'état de la machine de ce genre en produisant par l'ordinateur principal les données se rapportant à la machine exigées par l'ordinateur de travail et/ou le service exigé et dans lequel en outre, la mise de ces données se rapportant à la machine et/ou de ces services à la disposition de l'ordinateur de travail ou de son utilisateur s'effectue en transmettant les données se rapportant à la machine exigées par l'ordinateur de travail et/ou le service exigé de l'ordinateur principal à l'ordinateur de travail.

2. Procédé de transmission assistée par ordinateur et de mise à disposition de données se rapportant à une machine et/ou de services suivant la revendication 1, dans lequel on relève en temps réel les données d'état de la machine du côté de l'ordinateur de travail.

3. Procédé de transmission assistée par ordinateur et de mise à disposition de données se rapportant à une machine et/ou de services suivant la revendication 1 ou 2, dans lequel on transmet à l'ordinateur ( 8 ) principal un moyen d'identification univoque, notamment un code d'identification? associé à l'ordinateur ( 21 ) de travail du côté de la machine.

4. Procédé de transmission assistée par ordinateur et de mise à disposition de données se rapportant à une machine et/ou de services suivant la revendication 3, dans lequel l'ordinateur ( 8 ) principal associe des données d'état de la machine reçues par un ordinateur ( 21 ) de travail à cet ordinateur de travail à l'aide du moyen d'identification.

5. Procédé de transmission assistée par informatique et de mise à disposition de données se rapportant à une machine et/ou de services suivant l'une des revendications 1 à 4 précédentes, dans lequel les données d'état de la machine comprennent des données de programme ou des servosdonnées ou des données de moteur ou des données de convertisseur ou des données de position ou des données de capteur.

6. Procédé de transmission assistée par ordinateur et de mise à disposition de données se rapportant à une machine et/ou de services suivant l'une des revendications précédentes 1 à 5, dans lequel lorsque l'ordinateur ( 21 ) de travail mémorise intermédiairement dans un moyen de mémoire les données d'état de la machine relevées avant de les transmettre à l'ordinateur ( 8 ) principal.

7. Procédé de transmission assistée par informatique et de mise à disposition de données se rapportant à des machines et/ou de services suivant la revendication 6, dans lequel les données d'état de la machine mémorisées dans le moyen de mémoire sont transmises d'une manière commandée dans le temps ou commandée en fonction d'un évènement à l'ordinateur ( 8 ) principal par l'intermédiaire de la liaison ( 14 ) de communication de données.

8. Procédé de transmission assistée par informatique et de mise à disposition de données se rapportant à une machine et/ou de services suivant l'une des revendications précédentes 1 à 7, dans lequel on effectue, du côté de l'ordinateur ( 8 ) principal, une analyse automatique ou une exploitation des données d'état de la machine, qui sont reçues.

9. Procédé d'élaboration d'une base de données ayant des données se rapportant à des machines pour une multiplicité de machines industrielles de traitement, dans lequel un ordinateur ( 8 ) principal commun effectue, pour une multiplicité d'ordinateurs ( 21 ) de travail associés aux machines industrielles de traitement, une production assistée par ordinateur et une mise à disposition de données se rapportant aux machines et/ou de services suivant les revendications précédentes 4 à 8, dans lequel on produit dans un moyen de mémoire un jeu de données ayant les données d'état de machine de l'un des ordinateurs ( 21 ) de travail et on détermine le code d'identification univoque associé à cet ordinateur de travail et on ajoute au jeu de données une information correspondant au code d'identification.

10. Procédé de mise à disposition assisté par ordinateur de données se rapportant aux machines et/ou de services d'un ordinateur principal d'un fournisseur de services par un ordinateur de travail d'une machine de traitement d'un client par l'intermédiaire d'un réseau suivant l'une des revendications 1 à 9, dans lequel l'ordinateur ( 8 ) principal reçoit de l'ordinateur ( 21 ) de travail de l'information se rapportant à un certain nombre de données exigées se rapportant à la machine et/ou de services et les mémorise.

11. Procédé de mise à disposition assistée par ordinateur de données se rapportant aux machines et/ou de services d'un ordinateur principal suivant la revendication 9 ou 10, notamment pour la mise à disposition assistée par ordinateur d'opérations de service à des fins d'optimisation, comprenant les stades supplémentaires de procédé suivants :
- on produit une structure de données pour la réception de données se rapportant à une opération de service,
- on mémorise dans la structure de données des premières données qui représentent l'identité d'un client notamment le code d'identification univoque, et
- on mémorise dans la structure de données d'autres données qui représentent l'identité de l'opération de service.

12. Procédé de mise à disposition assistée par ordinateur de données se rapportant aux machines et/ou de services d'un ordinateur principal suivant la revendication 11, notamment pour la mise à disposition assistée par ordinateur d'opérations de service à des fins d'optimisation, comprenant les stades supplémentaires de procédé suivants :
on mémorise dans la structure de données d'autres données qui représentent des données de mesure.

13. Procédé de mise à disposition assistée par ordinateur de données se rapportant aux machines et/ou de services d'un ordinateur principal suivant l'une des revendications 10 à 12, comprenant les stades supplémentaires de procédé suivants pour le relevé d'informations de prix pour le paiement :
- on détermine une première information de prix comme coût fixe d'un laps de temps prescrit se répétant, notamment d'un laps de temps mensuel,
- on détermine une deuxième information de prix comme coûts variables en fonction d'un service mis à disposition.

14. Dispositif de mise à disposition assistée par ordinateur de données se rapportant à des machines et/ou de services sur un ordinateur ( 8 ) principal d'un fournisseur de services pour un ordinateur ( 21 ) de travail d'une machine ( 20 ) de traitement d'un client par l'intermédiaire d'un réseau ( 14 ), comprenant un système pour la manipulation informatisée et la gestion d'une machine industrielle de traitement à commande numérique ayant les caractéristiques suivantes :
- un ordinateur principal pour la production et la mise à disposition de données se rapportant à la machine et/ou de services et
- un ordinateur ( 21 ) de travail côté machine, qui est relié à l'ordinateur principal par l'intermédiaire d'un réseau ( 14 ), des données d'état de la machine pouvant être détectées par l'ordinateur de travail et pouvant être transmises à l'ordinateur principal, l'ordinateur de travail de la machine de traitement du client disposant d'un système de commande et/ou de contrôle de la machine de traitement et d'un capteur ( 16 ) approprié de détection de données d'état de la machine et étant relié au réseau, comprenant les autres caractéristiques suivantes du côté de l'ordinateur principal :
- un moyen de transmission
- d'informations pour la disponibilité de données se rapportant à la machine et/ou de services de l'ordinateur principal à l'ordinateur de travail et
- d'informations se rapportant à des données d'état de la machine nécessaires à relever par l'ordinateur de travail de l'ordinateur principal à l'ordinateur de travail
- des données se rapportant à la machine et demandées par l'ordinateur de travail et/ou du service demandé de l'ordinateur principal à l'ordinateur de travail et un moyen de réception
- d'une demande de données se rapportant à la machine et/ou d'un service par l'ordinateur de travail du côté de l'ordinateur principal, et
- de données de l'ordinateur de travail comportant les données d'état de la machine nécessaires du côté de l'ordinateur principal, et
- un moyen de production par l'ordinateur principal des données se rapportant à la machine demandées par l'ordinateur de travail et/ou du service demandé.

15. Dispositif de préparation assistée par ordinateur de données se rapportant à la machine et/ou de services sur un ordinateur ( 8 ) principal d'un fournisseur de services suivant la revendication 14, dans lequel le moyen de production des données se rapportant à la machine demandées par l'ordinateur ( 21 ) de travail et/ou le service demandé par l'ordinateur ( 8 ) principal comprend un serveur de Web Internet et l'ordinateur principal est programmé de manière appropriée pour produire ainsi des pages de Web Internet.

16. Dispositif de préparation assistée par l'ordinateur de données se rapportant à la machine et/ou de services sur un ordinateur ( 8 ) principal d'un fournisseur de services suivant la revendication 14 ou 15, dans lequel l'ordinateur ( 21 ) de travail du client a un moyen d'identification univoque, notamment un code d'identification, de la machine ( 20 ) de traitement, et dans lequel l'ordinateur ( 8 ) principal dispose d'un moyen de mémorisation, notamment d'une base de données, pour l'enregistrement d'informations de l'ordinateur de travail en liaison avec le code d'identification.

17. Dispositif de mise à disposition assistée par ordinateur d'opérations de service pour un système d'automatisation par l'intermédiaire d'un réseau ( 14 ), comprenant un système de manipulation assistée par ordinateur et de gestion d'une machine ( 20 ) industrielle de traitement à commande numérique suivant l'une des revendications précédentes 14 à 13, comprenant les caractéristiques suivantes :
- un moyen ( 22 ) pour charger des instructions ( 24, 25 ) sur le système d'automatisation, les instructions commandant au moins une fonction ou un autre aspect du système d'automatisation,
- un moyen ( 23 ) de réception de données se rapportant au client du système d'automatisation par l'intermédiaire du réseau, ces données de système étant rassemblées en fonction des instructions chargées,
- un moyen de production d'opérations de service appropriées pour le système d'automatisation en fonction des données de système rassemblées se rapportant au client, et
- un moyen de transmission d'opérations de service de ce genre au système d'automatisation du client par l'intermédiaire du réseau.

18. Dispositif de mise à disposition assistée par ordinateur d'opérations de service pour un système d'automatisation par l'intermédiaire d'un réseau, suivant la revendication 17, comprenant un moyen de mise à disposition d'une sélection d'options d'opérations de service au système d'automatisation du client par l'intermédiaire du réseau.

19. Dispositif de mise à disposition assistée par ordinateur d'opérations de service pour un système d'automatisation par l'intermédiaire d'un réseau, suivant la revendication 18 comprenant un moyen de sélection de l'une des options des opérations de service du côté du système d'automatisation du client.

20. Dispositif de mise à disposition assistée par ordinateur d'opérations de service pour un système d'automatisation par l'intermédiaire d'un réseau, suivant l'une des revendications précédentes 14 à 19, dans lequel le système d'automatisation dispose d'une interface de réseau pour la communication par l'intermédiaire du réseau et pour la réception des informations de service, et il est prévu un moyen ( 22 ) de production de séquences ( 24, 25 ) de programme pouvant être réalisées par machine sur la base des services reçus, l'interface de réseau et le moyen de production de séquences de programme pouvant être réalisées par machine échangeant des données sur un format de données prescrit.

21. Dispositif de mise à disposition assistée par ordinateur d'opérations de service pour un système d'automatisation par l'intermédiaire d'un réseau, suivant la revendication 20, dans lequel l'interface de réseau comprend un browser ( 23 ) d'Internet.
